# EUROPÄISCHE PATENTSCHRIFT

(11) **EP 3 278 060 B1**
(45) Veröffentlichungstag und Bekanntmachung des Hinweises auf die Patenterteilung: **12.06.2019**
(21) Anmeldenummer: 16717245.1
(22) Anmeldetag: 10.03.2016
(51) Int. Cl.: G01B 11/27

(54) **VERFAHREN ZUM ANORDNEN EINES LASERAUSRICHTSYSTEMS AN EINER VORRICHTUNG MIT ZWEI DURCH EINE KUPPLUNG MITEINANDER VERBUNDENEN WELLEN**
METHOD FOR ARRANGING A LASER ALIGNMENT SYSTEM ON A DEVICE HAVING TWO SHAFTS CONNECTED TO EACH OTHER BY MEANS OF A COUPLING
PROCÉDÉ SERVANT À DISPOSER UN SYSTÈME D'ALIGNEMENT À LASER SUR UN DISPOSITIF COMPRENANT DEUX ARBRES RELIÉS L'UN À L'AUTRE PAR UN COUPLAGE

(30) Priorität: 30.03.2015 DE 102015205710
(43) Veröffentlichungstag der Anmeldung: 07.02.2018
(73) Patentinhaber: Prüftechnik Dieter Busch AG, 85737 Ismaning (DE)
(72) Erfinder: LENZ, Johann, 85737 Ismaning (DE); PETER, Mathias, 85452 Moosinning (DE)
(86) Internationale Anmeldenummer: PCT/DE2016/200128
(87) Internationale Veröffentlichungsnummer: WO 2016/155719

(56) Entgegenhaltungen:
- WO-A2-2013/137807
- DE-A1- 3 335 336
- DE-A1-102009 053 132
- US-A- 5 077 905
- US-A1- 2013 111 768

## Beschreibung

### Hintergrund der Erfindung

Die vorliegende Erfindung betrifft ein Verfahren zum Anordnen eines Laserausrichtsystems an einer Vorrichtung mit zwei durch eine Kupplung miteinander verbundenen Wellen.

Laserausrichtsysteme, die an derartigen Vorrichtungen angeordnet werden, dienen hierbei in der Regel der Ermittlung einer ggf. vorhanden Fehlausrichtung der beiden Wellen-also eine Ausrichtung der Wellen zueinander, bei welcher die Wellen nicht miteinander fluchten bzw. nicht exakt miteinander fluchten. Die Fehlausrichtung gegenüber der idealen fluchtenden Ausrichtung wird hierbei in der Regel durch die bekannten Größen umfassend horizontaler Winkelversatz, vertikaler Winkelversatz, horizontaler Parallelversatz und vertikaler Parallelversatz angegeben, welche die Abweichung von der idealen fluchtenden Ausrichtung quantifizieren. Auf der Grundlage der ermittelten Fehlausrichtung kann dann die Lage wenigstens einer der beiden Wellen entsprechend verändert werden, um eine fluchtende Ausrichtung zu realisieren.

Verfahren der eingangs genannten Art kommen insbesondere bei der Ermittlung der Ausrichtung bzw. der Fehlausrichtung zweier durch eine Kupplung miteinander verbundener Wellen zum Einsatz. Bei der Ermittlung der Ausrichtung bzw. Fehlausrichtung wird unter Verwendung einer an einer Welle befestigten bzw. angesetzten ersten Einrichtung des Laserausrichtsystems, die z.B. eine Laserlicht-Erfassungseinrichtung aufweisen kann, und einer an der anderen Welle befestigten bzw. angesetzten zweiten Einrichtung des Laserausrichtsystem, die z.B. eine Laserlichtquelle aufweisen kann, eine Fehlausrichtung der beiden Wellen-also eine Ausrichtung der Wellen zueinander, bei welcher die Wellen nicht miteinander fluchten bzw. nicht exakt miteinander fluchtenermittelt.

Verfahren der eingangs genannten Art sind z.B. aus der RU 2 352 901 C2 oder der DE 33 35 336 A1 bekannt. Aus der DE 103 52 719 A1 ist ein Verfahren zur Ausrichtung von zwei Objekten bekannt. Aus der DE 101 32 142 A1 ist ein Verfahren zum Ausrichten von Maschinenwellen bekannt. Aus der US 6,915,582 B1 ist ein Verfahren zum Ausrichten zweier Maschinenteile bekannt. Aus der US 2014/0115907 A1 ist eine Laser-Ausrichtungsvorrichtung bekannt.

Zum Ermitteln der Fehlausrichtung ist es erforderlich, die Welle bzw. die Wellen um einen möglichst großen Drehwinkel zu drehen, wobei besonders bevorzugt eine vollständige 360-Grad-Drehung vorgenommen wird, um die Fehlausrichtung möglichst präzise aus den Austreffpositionen eines Laserstrahls einer Laserlichtquelle z.B. auf den Sensormessfeldern einer Laserlicht-Erfassungseinrichtung während der Drehung zu ermitteln. Je größer der Drehwinkel der Drehung desto genauer kann in der Regel die Fehlausrichtung aus den sich während der Drehung auf den Messfeldern erfassten Auftreffpositionen des Laserlichtstrahls auf den Sensormessfeldern ermittelt werden. Allerdings ist infolge baulicher Gegebenheiten eine vollständige Drehung der Wellen oft nicht möglich, da diese durch die an der jeweiligen Welle befestigte erste Einrichtung (die z.B. eine Laserlicht-Erfassungseinrichtung aufweisen kann bzw. eine Laserlicht-Erfassungseinrichtung sein kann) bzw. durch die an der jeweiligen anderen Welle befestigten zweiten Einrichtung (die z.B. eine Laserlichtquelle aufweisen kann bzw. eine Laserlichtquelle sein kann) behindert wird. Eine vollständige Drehung kann infolge baulicher Gegebenheiten deshalb nicht möglich sein, weil die vollständige Drehung durch Hindernisse an oder in Umgebung der Vorrichtung mit den beiden Wellen behindert wird, an welche die erste und/oder die zweite Einrichtung anstößt. Bei den Hindernissen kann es sich z.B. um Bremssattel oder um Anbauten der Maschine bzw. der Vorrichtung handeln.

In vielen Situationen kann jedoch eine vollständige Umdrehung dadurch realisiert werden, dass die erste und zweite Einrichtung in Umgebung bzw. naher Umgebung der die beiden Wellen miteinander verbindenden Kupplung an der Vorrichtung befestigt werden. Aus der RU 2 352 901 C2 ist hierbei bekannt, einen Laserlichtsensor einer ersten Einrichtung in Form einer Laserlicht-Erfassungseinrichtung zwischen einem Verbindungsflansch der ersten Welle und einem ersten Kupplungsflansch der Kupplung zu befestigen und eine zweite Einrichtung in Form einer Laserlichtquelle durch Einklemmen eines Befestigungsmittels der Laserlichtquelle zwischen einem Schraubenkopf einer Verbindungsschraube und dem zweiten Kupplungsflansch der Kupplung zu befestigen. Die Verbindung des Laserlichtsensors und der Laserlicht-Erfassungseinrichtung mit der jeweiligen Vorrichtung ist hierbei sehr aufwendig und erfordert ein Lösen der Verbindung zwischen dem Verbindungsflansch der ersten Welle und dem ersten Kupplungsflansch und ein Lösen der Verbindung zwischen dem Verbindungsflansch der zweiten Welle und dem zweiten Kupplungsflansch.

Aus der US 5 077 905 A ist eine Baugruppe zur Laserausrichtung und ein Verfahren zur Laserausrichtung bekannt. Aus der DE 10 2009 053 132 A1 ist insbesondere eine Vorrichtung zur Messung der relativen Ausrichtung zweier Gegenstände bekannt. Aus der WO 2013/137807 A2 ist eine mobile Anzeigeeinheit zur graphischen Darstellung der Ausrichtung von physikalischen Komponenten bekannt. Aus der US :2013/111768 A1 ist ein Verfahren zur Bestimmung der Ausrichtung von drei Wellen bekannt.

### Zugrundeliegende Aufgabe

Es ist Aufgabe der Erfindung, ein Verfahren anzugeben, mit welchem auf einfache und praktische Weise ein Laserausrichtsystem an einer Vorrichtung mit zwei durch eine Kupplung miteinander verbundenen Wellen in Umgebung der Kupplung angeordnet werden kann.

Diese Aufgabe wird erfindungsgemäß mit einem Verfahren mit den Merkmalen des Anspruchs 1 gelöst.

Das erfindungsgemäße Verfahren ist ein Verfahren zum Anordnen eines Laserausrichtsystems an einer Vorrichtung mit zwei durch eine Kupplung miteinander verbundenen Wellen.

Das Laserausrichtsystem weist eine erste Einrichtung bzw. wenigstens eine erste Einrichtung auf und weist eine zweite Einrichtung bzw. wenigstens eine zweite Einrichtung auf.

Bei der Vorrichtung, an welche das Laserausrichtsystem bzw. die erste und zweite Einrichtung desselben mittes des erfindungsgemäßen Verfahrens angeordnet werden kann bzw. können, weist die Kupplung, die beide Wellen miteinander verbindet, einen ersten und einen zweiten Verbindungsflansch auf. Ferner ist bei der Vorrichtung an einer ersten der beiden Wellen ein erstes Verbindungselement vorgesehen und an der zweiten Welle der beiden Wellen ist ein zweites Verbindungselement vorgesehen. Das erste Verbindungselement ist mit dem ersten Verbindungsflansch verbunden und das zweite Verbindungselement ist mit dem zweiten Verbindungsflansch verbunden.

Das erfindungsgemäße Verfahren zeichnet sich durch die folgenden Schritte aus:
(A) Verbinden bzw. festes und lösbares Verbinden der ersten Einrichtung mit dem ersten Verbindungselement zum Anordnen der ersten Einrichtung in einer vorgegebenen Position bzw. in einer Position zwischen den beiden Verbindungsflanschen, in welcher die erste Einrichtung von der Kupplung beabstandet ist, und
(B) Verbinden bzw. festes und lösbares Verbinden der zweiten Einrichtung mit dem zweiten Verbindungselement zum Anordnen der zweiten Einrichtung in einer vorgegebenen Position bzw. in einer Position zwischen den beiden Verbindungsflanschen, in welcher die zweite Einrichtung von der Kupplung beabstandet ist.

Im Unterschied zu der aus der Druckschrift RU 2 352 901 C2 bekannten Lösung, bei welcher ein Laserlichtsensor einer ersten Einrichtung, die eine Laserlicht-Erfassungseinrichtung umfasst zwischen einem Verbindungselement einer der beiden Wellen und einem ersten Verbindungsflansch bzw. ersten Kupplungsflansch der Kupplung eingeklemmt bzw. befestigt wird, erfolgt bei dem erfindungsgemäßen Verfahren in Schritt A ein Verbinden bzw. festes und lösbares Verbinden der ersten Einrichtung - die beispielsweise auch eine Laserlicht-Erfassungseinrichtung umfassen kann - mit dem ersten Verbindungselement zum Anordnen der ersten Einrichtung in einer vorgegebenen Position zwischen den beiden Verbindungsflanschen, in welcher die erste Einrichtung von der Kupplung beabstandet ist. Zum Verbinden muss dabei die erste Einrichtung lediglich mit dem ersten Verbindungselement bzw. dem Verbindungselement der ersten Welle verbunden werden ohne dass hierfür - wie bei der aus der RU 2 352 901 C2 bekannten Lösung - die Verbindung zwischen dem ersten Verbindungselement und dem ersten Verbindungsflansch bzw. Kupplungsflansch aufwendig zu lösen bzw. zu lockern wäre. Entsprechendes trifft vorteilhaft auch für das Verbinden bzw. das feste und lösbare Verbinden der zweiten Einrichtung, die beispielsweise Laserlichtquelle umfassen kann, mit dem zweiten Verbindungselement in Schritt B zu. Bei der aus der RU 2 352 901 C2 bekannten Lösung, bei welcher eine Laserlichtquelle durch Einklemmen eines Befestigungsmittels der Laserlichtquelle zwischen einem Schraubenkopf einer Verbindungsschraube und dem zweiten Verbindungsflansch bzw. Kupplungsflansch an diesem befestigt wird, muss zunächst auch aufwendig die Verbindung zwischen dem zweiten Verbindungselement und dem zweiten Kupplungsflansch zur Herstellung dieser Verbindung bzw. Befestigung gelöst werden.

Insgesamt betrachtet kann mit dem erfindungsgemäßen Verfahren auf einfache und praktische Weise ein Laserausrichtsystem bzw. eine erste und eine zweite Einrichtung eines Laserausrichtsystems an einer Vorrichtung mit zwei durch eine Kupplung miteinander verbundenen Wellen in Umgebung der Kupplung angeordnet werden.

Durch das erfindungsgemäße Verfahren ist bei der Ermittlung der Fehlausrichtung der Wellen vorteilhaft insbesondere eine kontinuierliche Drehbewegung und gleichzeitige Messwertaufnahme möglich. Einige bekannte Verfahren zur Ermittlung der Fehlausrichtung der Wellen hingegen arbeiten mit einer Punktmessung und aktivierter Bremse, was nachteilig die Lage der Drehachsen verändert, so dass diese nicht mehr einer Betriebsdrehachse entsprechen. Ferner kann das Anordnen bzw. Montieren des Laserausrichtsystems an der Vorrichtung mittels des erfindungsgemäßen Verfahrens vorteilhaft auch schnell und einfach vorgenommen werden, insbesondere weil ggf. ein Kupplungsschutz an der Vorrichtung zumindest teilweise verbleiben kann. Der Anwender hat somit ein hohes Maß an Sicherheit während der Messwertaufnahme. Ferner kann mittels des erfindungsgemäßen Verfahrens die erste Einrichtung und/oder die zweite Einrichtung wirksam bzw. sicher vor Anstreifen und/oder Anstoßen an Maschinenteilen (wie z.B. einem Bremssattel) geschützt werden.

Durch die Benennung der obigen Schritte mit den Buchstaben A und B ist selbstverständlich keine Bindung an eine zeitliche Abfolge zu verstehen. Schritt A kann nach Schritt B vorgenommen werden oder es kann Schritt B nach Schritt A vorgenommen werden. Insbesondere können die Schritte auch zeitglich vorgenommen werden bzw. wenigstens zeitweise zeitgleich vorgenommen werden.

Dass die erste Einrichtung bzw. die zweite Einrichtung jeweils mit einem Verbindungselement der Welle verbunden wird, über welches die Welle mit dem jeweiligen Verbindungsflansch der Kupplung verbunden ist, bringt den Vorteil mit sich, dass dadurch - ganz im Unterschied zu der aus der RU 2 352 901 C2 bekannten Lösung- eine drehfeste Verbindung der ersten bzw. zweiten Einrichtung mit der jeweiligen Welle realisiert werden kann, was wiederum mit einer hohen Genauigkeit für die Messung bzw. die Ermittlung der Fehlausrichtung der Wellen unter Verwendung der ersten Einrichtung und der zweiten Einrichtung verbunden ist.

In den jeweiligen Positionen bzw. in den jeweils vorgegebenen Positionen (vgl. Schritt A und B) sind die erste und zweite Einrichtung von der Kupplung beabstandet bzw. von dieser getrennt. Eine Verbindung bzw. direkte Verbindung der ersten und zweiten Einrichtung mit der Kupplung liegt also nicht vor. Oder in anderen Worten: Die erste und zweite Einrichtung sind mit der Kupplung unverbunden bzw. mit der Kupplung nicht verbunden bzw. die erste und zweite Einrichtung weisen keinen Kontakt zu der Kupplung auf.

In Schritt A erfolgt das Verbinden (bzw. das feste und lösbare Verbinden) der ersten Einrichtung mit dem ersten Verbindungselement zum Anordnen der ersten Einrichtung in einer vorgegebenen Position zwischen den beiden Verbindungsflanschen, in welcher die erste Einrichtung von der Kupplung beabstandet ist. Nach dem Verbinden der ersten Einrichtung mit dem ersten Verbindungselement (bzw. in dem Zustand, in welchem die erste Einrichtung mit dem ersten Verbindungselement verbunden ist) befindet sich die erste Einrichtung also in einer vorgegebenen Position zwischen den beiden Verbindungsflanschen. Die vorgegebene Position ist besonders bevorzugt eine Position, in welcher eine vollständige (oder nahezu vollständige) Drehung der Welle oder der Wellen möglich ist, also ohne dass die vollständige Drehung durch Hindernisse an oder in Umgebung der Vorrichtung mit den beiden Wellen behindert wird, an welche die erste Einrichtung anstößt. In der vorgegebenen Position befindet sich die erste Einrichtung zwischen den beiden Flanschen bzw. in der vorgegebenen Position befindet sich die erste Einrichtung teilweise oder zur Gänze zwischen den beiden Verbindungsflanschen.

In Schritt B erfolgt das Verbinden der zweiten Einrichtung mit dem zweiten Verbindungselement zum Anordnen der zweiten Einrichtung in einer vorgegebenen Position zwischen den beiden Verbindungsflanschen, in welcher die zweite Einrichtung von der Kupplung beabstandet ist. Nach dem Verbinden der zweiten Einrichtung mit dem zweiten Verbindungselement (bzw. in dem Zustand, in welchem die zweiten Einrichtung mit dem zweiten Verbindungselement verbunden ist) befindet sich die zweite Einrichtung also in einer vorgegebenen Position zwischen den beiden Verbindungsflanschen. Die vorgegebene Position ist, wie auch bei Schritt A, besonders bevorzugt eine Position, in welcher eine vollständige (oder nahezu vollständige) Drehung der Welle oder der Wellen möglich ist, also ohne dass die vollständige Drehung durch Hindernisse an oder in Umgebung der Vorrichtung mit den beiden Wellen behindert wird, an welche die zweite Einrichtung anstößt.

Wenn die erste Einrichtung z.B. eine Laserlicht-Erfassungseinrichtung und die zweite Einrichtung z.B. eine Laserlichtquelle aufweist, sind die Positionen bzw. die vorgegebenen Positionen besonders bevorzugt derart gewählt, dass ein von der Laserlichtquelle erzeugter Laserlichtstrahl in jeder Drehstellung bzw. in jeder vorgesehenen bzw. erwünschten Drehstellung der ersten und/oder zweiten Welle auf ein ebenes Messfeld eines Laserlichtsensors der Laserlicht-Erfassungseinrichtung auftreffen kann, um die Fehlausrichtung der Wellen ermitteln zu können.

Bei der ersten und der zweiten Einrichtung kann es sich jeweils um eine dem Fachmann bekannte beliebige Einrichtung handeln, von denen die erste oder die zweite Einrichtung eine Laserlichtquelle aufweist und mit welchen die Ermittlung der Fehlausrichtung der Wellen bzw. die Ermittlung der Fehlausrichtung der Wellen zueinander möglich ist. Insbesondere kann die erste Einrichtung eine Laserlicht-Erfassungseinrichtung aufweisen und die zweite Einrichtung kann eine Laserlichtquelle aufweisen (oder umgekehrt) oder die erste Einrichtung kann eine Laserlicht-Erfassungseinrichtung und eine Laserlichtquelle und die zweite Einrichtung kann eine Reflektoreinrichtung, die z.B. ein Umlenkprisma hat, aufweisen. Bei der Variante gemäß der zweiten Oder-Alternative kann nach dem Anordnen des Laserausrichtsystems an der Vorrichtung mit den beiden Wellen gemäß dem erfindungsgemäßen Verfahren die Ermittlung der Fehlausrichtung in für den Fachmann bekannter Weise auf der Grundlage der Auftreffpositionen des Laserlichtflecks des Laserlichtstrahls auf einem ebenen Messfeld der Laserlicht-Erfassungseinrichtung ermittelt werden, wobei der Laserlichtstrahl an der Reflektoreinrichtung der zweiten Einrichtung zu dem Messfeld hin reflektiert wird.

Bei der Variante gemäß der zweiten Oder-Alternative sind die Positionen bzw. die vorgegebenen Positionen besonders bevorzugt derart gewählt, dass ein von der Laserlichtquelle erzeugter Laserlichtstrahl in jeder Drehstellung bzw. in jeder vorgesehenen bzw. erwünschten Drehstellung der ersten und/oder zweiten Welle nach der Reflexion an der Reflektoreinrichtung auf ein ebenes Messfeld eines Laserlichtsensors der Laserlicht-Erfassungseinrichtung auftreffen kann, um die Fehlausrichtung der Wellen ermitteln zu können.

Bei dem Laserausrichtsystem kann es sich insbesondere auch um ein Laserausrichtsystem handeln, das auf der Grundlage eines dem Fachmann bekannten Doppelradialverfahrens arbeitet bzw. welches dazu eingerichtet ist, auf der Grundlage des dem Fachmann bekannten Doppelradialverfahrens eine Fehlausrichtung zweier Wellen zu ermitteln.

Insbesondere kann die erste Einrichtung eine Laserlicht-Erfassungseinrichtung sein bzw. die erste Einrichtung kann in Form einer Laserlicht-Erfassungseinrichtung ausgebildet sein und die zweite Einrichtung kann eine Laserlichtquelle sein bzw. in Form einer Laserlichtquelle ausgebildet sein oder umgekehrt.

Zum Ermitteln einer eventuellen Fehlausrichtung der beiden Wellen zueinander nach dem Anordnen der ersten und der zweiten Einrichtung an der Vorrichtung mit den zwei Wellen gemäß dem erfindungsgemäßen Verfahren ist es erforderlich, die Welle bzw. die Wellen um einen möglichst großen Drehwinkel zu drehen, wobei besonders bevorzugt eine vollständige 360-Grad-Drehung vorgenommen wird, um die Fehlausrichtung möglichst präzise aus den Austreffpositionen des Laserstrahls der Laserlichtquelle auf den SensorMessfeldern der Laserlicht-Erfassungseinrichtung während der Drehung zu ermitteln. Je größer der Drehwinkel der Drehung desto genauer kann in der Regel die Fehlausrichtung aus den sich während der Drehung auf den Messfeldern erfassten Auftreffpositionen des Laserlichtstrahls auf den Sensormessfeldern ermittelt werden.

Das Verbinden der ersten Einrichtung mit dem ersten Verbindungselement bzw. das Verbinden der zweiten Einrichtung mit dem zweiten Verbindungselement kann z.B. durch eine Schraubverbindung oder eine Klemmverbindung erfolgen. Insbesondere kann an der ersten Einrichtung und an der zweiten Einrichtung jeweils eine Verbindungseinrichtung lösbar befestigt sein, die dazu eingerichtet ist, drehfest und lösbar bzw. fest und lösbar an dem ersten bzw. zweiten Verbindungselement befestigt zu werden, und zwar zur Herstellung einer lösbaren und drehfesten Verbindung bzw. lösbaren und festen Verbindung der ersten Einrichtung mit dem ersten Verbindungselement und zur Herstellung einer lösbaren und drehfesten Verbindung bzw. lösbaren und festen Verbindung der zweiten Einrichtung mit dem zweiten Verbindungselement.

Bei dem an der ersten Welle vorgesehenen Verbindungselement bzw. Verbindungsteil handelt es sich um ein an der ersten Welle befestigtes bzw. um ein an der ersten Welle drehfest befestigtes Verbindungselement bzw. Verbindungsteil oder um ein an der ersten Welle angeformtes Verbindungselement bzw. Verbindungsteil oder um ein mit der ersten Welle einstückiges Verbindungselement bzw. Verbindungsteil. Über bzw. durch das erste Verbindungselement bzw. erste Verbindungsteil wird eine Verbindung der ersten Welle zu dem ersten Verbindungsflansch der Kupplung hergestellt bzw. realisiert.

Auch bei dem an der zweiten Welle vorgesehenen Verbindungselement bzw. Verbindungsteil handelt es sich um ein an der zweiten Welle befestigtes bzw. um ein an der zweiten Welle drehfest befestigtes Verbindungselement bzw. Verbindungsteil oder um ein an der zweiten Welle angeformtes Verbindungselement bzw. Verbindungsteil oder um ein mit der zweiten Welle einstückiges Verbindungselement bzw. Verbindungsteil. Über bzw. durch das zweite Verbindungselement bzw. zweite Verbindungsteil wird eine Verbindung der zweiten zu dem zweiten Verbindungsflansch der Kupplung hergestellt bzw. realisiert.

Jedes der beiden Verbindungselemente kann insbesondere in Form eines an der jeweiligen Welle angeformten Flansches ausgebildet sein bzw. in Form eines mit der jeweiligen Welle einstückig ausgebildeten Flansches ausgebildet sein. Jedes der beiden Verbindungselemente kann insbesondere in Form eines an der jeweiligen Welle befestigten Flansches bzw. in Form eines an der jeweiligen Welle drehfest befestigten Flansches ausgebildet sein. Insbesondere können die Verbindungselemente und auch die Verbindungflansche der Kupplung wenigstens teilweise oder zur Gänze aus einem metallischen Material bestehen.

Bei den beiden Verbindungsflanschen der Kupplung handelt es sich vorzugweise um Flansche bzw. Teile, die jeweils an Zwischenteil der Kupplung angeformt sind bzw. mit diesem fest verbunden sind, welches die beiden Verbindungflansche fest bzw. drehfest miteinander verbindet.

Durch bzw. über die Kupplung sind die beiden Wellen miteinander verbunden, wobei durch die Kupplung eine Drehung der ersten Welle auf die zweite Welle übertragbar ist und umgekehrt. Bei der Kupplung kann es sich um eine übliche dem Fachmann bekannte Kupplung zur Übertragung von Drehung bzw. Drehmoment zwischen den beiden Wellen handeln.

Bei der Vorrichtung, an welche das Laserausrichtsystem bzw. die erste und die zweite Einrichtung mittels des erfindungsgemäßen Verfahrens angeordnet werden können. kann es sich z.B. um eine Vorrichtung mit einem Generator und einem Getriebe handeln, beim dem Drehmoment von einer an das Getriebe gekoppelten Welle über die Kupplung auf eine an den Generator gekoppelte Welle übertragen wird. Bei der Vorrichtung kann es sich in einem speziellen Beispiel z.B. um eine Windkraftanlage handeln, in welche infolge beengter Verhältnisse ein vollständige Umdrehung der Wellen nur dann möglich ist, wenn sich die erste und die zweite Einrichtung in den vorgegebene Positionen zwischen den beiden Verbindungsflanschen befinden. Für eine Drehachsenvermessung bzw. Fehlausrichtungsvermessung an Antrieben bzw. Vorrichtungen mit Generator und Getriebe ist es wichtig diese in einem sogenannten Trudel-Betrieb zu bewerkstelligen. In diesem Betrieb haben die Drehachsen der Generator-Welle und der Getriebe-Welle eine Betriebslage unter Leerlaufbedingungen. Um diese Messung bzw. Vermessung vorzunehmen, muss die Messtechnik im Kupplungsbereich so montiert werden, dass ein freies Drehen der Wellen um 360° bzw. um nahezu 360°möglich ist. Letzteres kann vorteilhaft durch das Verbinden der ersten und zweiten Einrichtung mit dem ersten und zweiten Verbindungselement in den vorgegebenen Positionen realisiert werden.

Bei einer bevorzugten Ausführungsform des erfindungsgemäßen Verfahrens wird in Schritt A die erste Einrichtung mit einer Außenfläche wenigstens einer Mutter verbunden bzw. mit einer Außenfläche wenigstens einer Mutter fest und lösbar verbunden, die auf wenigstens ein an dem ersten Verbindungselement befestigten Verschraubungsmittel aufgeschraubt bzw. fest aufgeschraubt ist und/oder in Schritt A wird die erste Einrichtung mit wenigstens einem Schraubenkopf wenigstens einer an dem ersten Verbindungselement befestigten Schraube verbunden bzw. mit wenigstens einem Schraubenkopf wenigstens einer an dem ersten Verbindungselement befestigten Schraube fest und lösbar verbunden.

Bei einer weiteren bevorzugten Ausführungsform des erfindungsgemäßen Verfahrens wird in Schritt B die zweite Einrichtung mit einer Außenfläche wenigstens einer Mutter verbunden bzw. mit einer Außenfläche wenigstens einer Mutter fest und lösbar verbunden, die auf wenigstens ein an dem zweiten Verbindungselement befestigten Verschraubungsmittel aufgeschraubt ist bzw. fest aufgeschraubt ist, und/oder in Schritt B wird die zweite Einrichtung mit wenigstens einem Schraubenkopf wenigstens einer an dem zweiten Verbindungselement befestigten Schraube verbunden bzw. mit wenigstens einem Schraubenkopf wenigstens einer an dem zweiten Verbindungselement befestigten Schraube fest und lösbar verbunden.

Bei diesen bevorzugten Ausführungsformen des erfindungsgemäßen Verfahrens erfolgt also das Verbinden der ersten Einrichtung bzw. der zweiten Einrichtung mit dem ersten bzw. zweiten Verbindungselement durch Verbinden mit einer Außenfläche einer Mutter oder mit einem Schraubenkopf, wobei die Mutter auf ein Verschraubungsmittel aufgeschraubt bzw. fest aufgeschraubt ist, das an dem ersten bzw. zweiten Verbindungselement befestigt ist, und wobei der Schraubenkopf ein Schraubenkopf einer an dem ersten bzw. zweiten Verbindungselement befestigten Schraube ist. Gemäß diesen bevorzugten Ausführungsformen des erfindungsgemäßen Verfahrens kann besonders vorteilhaft auf eine bereits an dem ersten bzw. zweiten Verbindungselement vorliegende Mutter oder auf einen an dem ersten Verbindungselement bzw. zweiten Verbindungselement vorliegenden Schraubenkopf zum Verbinden der ersten Einrichtung bzw. der zweiten Einrichtung mit dem ersten bzw. zweiten Verbindungselement bzw. zum festen und lösbaren Verbinden dieser Einrichtungen mit dem ersten bzw. zweiten Verbindungselement zurückgegriffen werden. Vorteilhaft kann gemäß diesen bevorzugten Ausführungsformen insbesondere ein schlanker und platzsparender Aufbau realisiert werden. Hindernisse, wie z:B. ein Bremssattel und/oder andere Anbauen der Vorrichtung bzw. Maschine sind nicht mehr im Weg und die Wellen können frei drehen.

Bei dem Verschraubungsmittel, wie insbesondere einer Schaube, kann es sich insbesondere um ein längliches Verschraubungsmittel handeln, welche das erste bzw. zweite Verbindungselement durchsetzt und dessen Schraubenachse parallel zur Drehachse der ersten Welle bzw. zweiten Welle ausgerichtet ist. Das Verschraubungsmittel kann dann insbesondere durch Festziehen der aufgeschraubten Mutter mit dem ersten bzw. zweiten Verbindungselement fest verbunden sein bzw. an diesem befestigt sein.

Auch bei der an dem ersten bzw. zweiten Verbindungselement befestigten Schraube mit dem Schraubenkopf kann es sich insbesondere um eine Schraube handeln, welche das erste bzw. zweite Verbindungselement durchsetzt und deren Schraubenachse parallel zur Drehachse der ersten Welle bzw. zweiten Welle ausgerichtet ist. Die Schraube kann dann z.B. durch Festziehen einer Mutter mit dem ersten bzw. zweiten Verbindungselement fest verbunden sein bzw. an diesem befestigt sein.

Das an dem ersten bzw. zweiten Verbindungsmittel befestigte Verschraubungsmittel kann insbesondere ein Verschraubungsmittel sein, durch welches die Kupplung mit dem ersten bzw. zweiten Verbindungselement verbunden ist. Auch die an dem ersten bzw. zweiten Verbindungsmittel befestigte Schraube kann insbesondere eine Schraube sein, durch welche die Kupplung mit dem ersten bzw. zweiten Verbindungselement verbunden ist.

Besonders bevorzugt wird in Schritt A die erste Einrichtung mit einer Außenfläche wenigstens einer Mutter verbunden bzw. fest und lösbar verbunden, die auf ein an dem ersten Verbindungselement befestigten Verschraubungsmittel aufgeschraubt ist bzw. fest aufgeschraubt ist und eine dem zweiten Verbindungsflansch zugewandte und rechtwinkelig zur Gewindeachse der Mutter ausgerichtete Teilfläche aufweist bzw. besonders bevorzugt wird in Schritt A die erste Einrichtung mit einem Schraubenkopf einer an dem ersten Verbindungselement befestigten Schraube verbunden bzw. fest und lösbar verbunden, der eine dem zweiten Verbindungsflansch zugewandte und rechtwinkelig zur Schraubenachse der Schraube ausgerichtete Teilfläche aufweist. Das Verbinden der ersten Einrichtung mit einer derart in Bezug auf die Drehachse der ersten Welle angeordneten Mutter bzw. mit einem derart in Bezug auf die Drehachse der ersten Welle angeordnetem Schraubenkopf kann auf besonders einfache und praktische Weise vorgenommen werden, da die Anordnung der Mutter bzw. des Schraubenkopfs in Bezug auf die Drehachse der ersten Welle ein einfaches Verbinden bzw. ein einfaches festes und lösbares Verbinden der ersten Einrichtung in einer erwünschten Position zwischen den beiden Verbindungsflanschen ermöglicht.

Besonders bevorzugt wird in Schritt B die zweite Einrichtung mit einer Außenfläche wenigstens einer Mutter verbunden bzw. fest und lösbar verbunden, die auf ein an dem zweiten Verbindungselement befestigten Verschraubungsmittel aufgeschraubt ist bzw. fest aufgeschraubt ist und eine dem ersten Verbindungsflansch zugewandte und rechtwinkelig zur Gewindeachse der Mutter ausgerichtete Teilfläche aufweist bzw. besonders bevorzugt wird in Schritt B die zweite Einrichtung mit einem Schraubenkopf einer an dem zweiten Verbindungselement befestigten Schraube verbunden, der eine dem ersten Verbindungsflansch zugewandte und rechtwinkelig zur Schraubenachse der Schraube ausgerichtete Teilfläche aufweist. Das Verbinden der zweiten Einrichtung mit einer derart in Bezug auf die Drehachse der zweiten Welle angeordneten Mutter bzw. mit einem derart in Bezug auf die Drehachse der zweiten Welle angeordnetem Schraubenkopf bringt die entsprechenden bereits oben im Zusammenhang mit der ersten Einrichtung dargelegten Vorteile mit sich.

Insbesondere kann die erste Einrichtung bzw. die zweite Einrichtung mit der jeweiligen Mutter oder dem jeweiligen Schraubenkopf über eine Verbindungseinrichtung verbunden werden, die an der ersten Einrichtung bzw. der zweiten Einrichtung lösbar befestigt ist. Zum Verbinden der ersten Einrichtung bzw. der zweiten Einrichtung mit dem ersten bzw. zweiten Verbindungselement kann dann die Verbindungseinrichtung mit dem ersten bzw. zweiten Verbindungselement verbunden bzw. fest und lösbar verbunden werden. Infolge des Verbindens mit der Außenfläche der Mutter bzw. dem Schraubenkopf - insbesondere bei Verbinden mit einer Mutter und einem Schraubenkopf mit den obigen Teilflächen- kann die Verbindungseinrichtung eine Ausbildung aufweisen, bei welcher die Verbindungseinrichtung im verbundenen Zustand der ersten Einrichtung bzw. der zweiten Einrichtung mit dem ersten bzw. zweiten Verbindungselement, abgesehen von einem Endabschnitt, nur bzw. ausschließlich zwischen dem ersten Verbindungsflansch und dem zweiten Verbindungsflansch der Kupplung angeordnet ist. Dies hat den Vorteil, dass auch die Verbindungseinrichtung in einer Position angeordnet werden kann, in welcher in der Regel eine vollständige (oder nahezu vollständige) Drehung der Welle oder der Wellen nicht durch die Verbindungseinrichtung durch Anstoßen an Hindernisse in Umgebung der jeweiligen Vorrichtung behindert wird. Insbesondere ein Unterbinden einer 360-Grad-Drehung durch zu "ausladende " Verbindungseinrichtungen kann auf diese Weise unterbunden werden.

Das Laserausrichtsystem umfasst eine erste bzw. wenigstens eine erste Einrichtung und eine zweite bzw. wenigstens eine zweite Einrichtung, wobei die erste Einrichtung und die zweite Einrichtung mit einer Vorrichtung verbindbar sind bzw. fest und lösbar verbindbar sind, wobei die Vorrichtung eine erste und zweite Welle umfasst, die durch eine Kupplung miteinander verbunden sind, wobei die Kupplung einen ersten und einen zweiten Verbindungsflansch aufweist, wobei an der ersten Welle ein erstes Verbindungselement vorgesehen ist, wobei an der zweiten Welle ein zweites Verbindungselement vorgesehen ist, wobei das erste Verbindungselement mit dem ersten Verbindungsflansch verbunden ist, und wobei das zweite Verbindungselement mit dem zweiten Verbindungsflansch verbunden ist, wobei die erste Einrichtung mit dem ersten Verbindungselement in einer Position bzw. in einer vorgegebenen Position zwischen den beiden Verbindungsflanschen verbindbar ist, in welcher die erste Einrichtung von der Kupplung beabstandet ist (bzw. wobei die erste Einrichtung zum Anordnen der ersten Einrichtung in einer Position bzw. in einer vorgegebenen Position zwischen den beiden Verbindungsflanschen, in welcher die erste Einrichtung von der Kupplung beabstandet ist, mit dem ersten Verbindungselement verbindbar ist) und wobei die zweite Einrichtung mit dem zweiten Verbindungselement in einer Position bzw. in einer vorgegebenen Position zwischen den beiden Verbindungsflanschen verbindbar ist, in welcher die zweite Einrichtung von der Kupplung beabstandet ist (bzw. wobei die zweite Einrichtung zum Anordnen der zweiten Einrichtung in einer Position bzw. in einer vorgegebenen Position zwischen den beiden Verbindungsflanschen, in welcher die zweite Einrichtung von der Kupplung beabstandet ist, mit dem zweiten Verbindungselement verbindbar ist).

Das Laserausrichtsystem zeichnet sich insbesondere dadurch aus, dass die erste Einrichtung mit dem ersten Verbindungselement in einer Position bzw. in einer vorgegebenen Position zwischen den beiden Verbindungsflanschen verbindbar ist, in welcher die erste Einrichtung von der Kupplung beabstandet ist, und dass die zweite Einrichtung mit dem zweiten Verbindungselement in einer Position bzw. in einer vorgegebenen Position zwischen den beiden Verbindungsflanschen verbindbar ist, in welcher die zweite Einrichtung von der Kupplung beabstandet ist. Durch diese Ausgestaltung können die erste und zweite Einrichtung auf einfache und praktische Weise in Umgebung der Kupplung angeordnet werden, wie bereits oben im Zusammenhang mit dem erfindungsgemäßen Verfahren dargelegt. Durch diese Ausgestaltung wird das Anordnen insbesondere gegenüber der aus der RU 2 352 901 C2 bekannten Lösung stark vereinfacht.

Bei einer praktischen Ausführungsform des erfindungsmäßen Laserausrichtsystems ist an der ersten Einrichtung eine Verbindungseinrichtung lösbar befestigt, mit welcher die erste Einrichtung mit dem ersten Verbindungselement in der vorgegebenen Position zwischen den beiden Verbindungsflanschen fest und lösbar verbindbar ist (bzw. drehfest und lösbar verbindbar ist), und/oder an der zweiten Einrichtung ist eine Verbindungseinrichtung lösbar befestigt, mit welcher die zweite Einrichtung mit dem zweiten Verbindungselement in der vorgegebenen Position zwischen den beiden Verbindungsflanschen fest und lösbar verbindbar ist (bzw. drehfest und lösbar verbindbar ist). Zum Festen und lösbaren Verbinden kann die jeweilige Verbindungseinrichtung z.B. eine Schrauben/Mutter-Kombination und/oder eine Klemmeinrichtung oder eine anderes hierfür geeignetes Mittel aufweisen.

Bei einer bevorzugten Ausführungsform des Laserausrichtsystems ist die an der ersten Einrichtung lösbar befestigte Verbindungseinrichtung mit wenigstens einer Mutter bzw. mit einer Außenfläche wenigstens einer Mutter fest und lösbar verbindbar, die auf wenigstens ein an dem ersten Verbindungselement befestigten Verschraubungsmittel aufgeschraubt bzw. fest aufgeschraubt ist und/oder die an der ersten Einrichtung lösbar befestigte Verbindungseinrichtung ist mit wenigstens einem Schraubenkopf wenigstens einer an dem ersten Verbindungselement befestigten Schraube fest und lösbar verbindbar.

Bei einer weiteren bevorzugten Ausführungsform des Laserausrichtsystems ist die an der zweiten Einrichtung lösbar befestigte Verbindungseinrichtung mit wenigstens einer Mutter bzw. mit einer Außenfläche wenigstens einer Mutter fest und lösbar verbindbar ist, die auf wenigstens ein an dem zweiten Verbindungselement befestigten Verschraubungsmittel aufgeschraubt bzw. fest aufgeschraubt ist und/oder die an der zweiten Einrichtung lösbar befestigte Verbindungseinrichtung ist mit wenigstens einem Schraubenkopf wenigstens einer an dem zweiten Verbindungselement befestigten Schraube fest und lösbar verbindbar.

Bei diesen bevorzugten Ausführungsformen des Laserausrichtsystems kann also das Verbinden der ersten Einrichtung bzw. der zweiten Einrichtung mit dem ersten bzw. zweiten Verbindungselement durch Verbinden der jeweiligen Verbindungseinrichtung mit einer Außenfläche einer Mutter oder mit einem Schraubenkopf erfolgen, wobei die Mutter auf ein Verschraubungsmittel aufgeschraubt bzw. fest aufgeschraubt ist, das an dem ersten bzw. zweiten Verbindungselement befestigt ist, und wobei der Schraubenkopf ein Schraubenkopf einer an dem ersten bzw. zweiten Verbindungselement befestigten Schraube ist.

Gemäß diesen bevorzugten Ausführungsformen des Laserausrichtsystems kann besonders vorteilhaft auf eine bereits an dem ersten bzw. zweiten Verbindungselement vorliegende Mutter oder auf einen an dem ersten Verbindungselement bzw. zweiten Verbindungselement vorliegenden Schraubenkopf zum Verbinden der jeweiligen Verbindungseinrichtung mit dem ersten bzw. zweiten Verbindungselement - bzw. zum festen und lösbaren Verbinden bzw. zum drehfesten und lösbaren Verbinden der jeweiligen Verbindungseinrichtung mit dem ersten bzw. zweiten Verbindungselement - zurückgegriffen werden.

Bei dem Verschraubungsmittel, wie insbesondere einer Schraube, kann es sich insbesondere um ein längliches Verschraubungsmittel handeln, welche das erste bzw. zweite Verbindungselement durchsetzt und dessen Schraubenachse parallel zur Drehachse der ersten Welle bzw. zweiten Welle ausgerichtet ist. Das Verschraubungsmittel kann dann insbesondere durch Festziehen der aufgeschraubten Mutter mit dem ersten bzw. zweiten Verbindungselement fest verbunden sein bzw. an diesem befestigt sein.

Das an dem ersten bzw. zweiten Verbindungsmittel befestigte Verschraubungsmittel kann insbesondere ein Verschraubungsmittel sein, durch welches die Kupplung mit dem ersten bzw. zweiten Verbindungselement verbunden ist. Auch die an dem ersten bzw. zweiten Verbindungsmittel befestigte Schraube kann insbesondere eine Schraube sein, durch welche die Kupplung mit dem ersten bzw. zweiten Verbindungselement verbunden ist.

Besonders bevorzugt ist die an der ersten Einrichtung lösbar befestigte Verbindungseinrichtung mit einer Außenfläche wenigstens einer Mutter fest und lösbar verbindbar, die auf ein an dem ersten Verbindungselement befestigten Verschraubungsmittel aufgeschraubt ist bzw. fest aufgeschraubt ist und eine dem zweiten Verbindungsflansch zugewandte und rechtwinkelig zur Gewindeachse der Mutter ausgerichtete Teilfläche aufweist bzw. besonders bevorzugt ist die an der ersten Einrichtung lösbar befestigte Verbindungseinrichtung mit einem Schraubenkopf einer an dem ersten Verbindungselement befestigten Schraube fest und lösbar verbindbar, der eine dem zweiten Verbindungsflansch zugewandte und rechtwinkelig zur Schraubenachse der Schraube ausgerichtete Teilfläche aufweist. Das Verbinden der ersten Einrichtung mit einer derart in Bezug auf die Drehachse der ersten Welle angeordneten Mutter bzw. mit einem derart in Bezug auf die Drehachse der ersten Welle angeordnetem Schraubenkopf kann auf besonders einfache und praktische Weise vorgenommen werden, da die Anordnung der Mutter bzw. des Schraubenkopfs in Bezug auf die Drehachse der ersten Welle ein einfaches Verbinden bzw. ein einfaches festes und lösbares Verbinden der ersten Einrichtung in einer erwünschten Position zwischen den beiden Verbindungselementen ermöglicht.

Besonders bevorzugt ist die an der zweiten Einrichtung lösbar befestigte Verbindungseinrichtung mit einer Außenfläche wenigstens einer Mutter fest und lösbar verbindbar, die auf ein an dem zweiten Verbindungselement befestigten Verschraubungsmittel aufgeschraubt ist bzw. fest aufgeschraubt ist und eine dem ersten Verbindungsflansch zugewandte und rechtwinkelig zur Gewindeachse der Mutter ausgerichtete Teilfläche aufweist bzw. besonders bevorzugt ist die an der zweiten Einrichtung lösbar befestigte Verbindungseinrichtung mit einem Schraubenkopf einer an dem zweiten Verbindungselement befestigten Schraube fest und lösbar verbindbar, der eine dem ersten Verbindungsflansch zugewandte und rechtwinkelig zur Schraubenachse der Schraube ausgerichtete Teilfläche aufweist. Das Verbinden der zweiten Einrichtung mit einer derart in Bezug auf die Drehachse der zweiten Welle angeordneten Mutter bzw. mit einem derart in Bezug auf die Drehachse der zweiten Welle angeordnetem Schraubenkopf bringt die entsprechenden bereits oben im Zusammenhang mit der ersten Einrichtung dargelegten Vorteile mit sich.

Bei einer besonders praktischen Ausführungsform des Laserausrichtsystems ist an der Verbindungseinrichtung, die an der ersten Einrichtung lösbar befestigt ist, und/oder an der Verbindungseinrichtung, die an zweiten Einrichtung lösbar befestigt ist, wenigstens eine Aufnahme vorgesehen ist, in welche die Mutter oder der Schraubenkopf zum festen und lösbaren Verbinden mit der Mutter bzw. mit der Außenfläche der Mutter oder zum festen und lösbaren Verbinden mit dem Schraubenkopf formschlüssig aufnehmbar ist oder formschlüssig und reibschlüssig bzw. kraftschlüssig aufnehmbar ist.

In die Aufnahme ist also die Mutter zum festen und lösbaren Verbinden mit der Außenfläche der Mutter formschlüssig oder formschlüssig und reibschlüssig bzw. kraftschlüssig aufnehmbar. Es kann an der Verbindungseinrichtung auch eine Aufnahme vorgesehen sein, in welche der Schraubenkopf zum festen und lösbaren Verbinden mit dem Schraubenkopf formschlüssig aufnehmbar ist oder formschlüssig und reibschlüssig bzw. kraftschlüssig aufnehmbar ist. Sofern die Mutter bzw. der Schraubenkopf in der Aufnahme formschlüssig aufnehmbar ist, kann durch Vorsehen geeigneter Mittel, wie z. B einer in die Aufnahme einschraubbaren Klemmschraube zum Festklemmen der Mutter bzw. des Schraubenkopfs in der Aufnahme, zudem eine reibschlüssige bzw. kraftschlüssige Aufnahme bzw. Verbindung realisiert werden. Insbesondere kann die Verbindungseinrichtung wenigstens eine Klemmschraube aufweisen, die durch bzw. über wenigstens ein Gewinde, das an der die Aufnahme begrenzenden Innenfläche vorgesehen ist bzw. in diese Innenfläche eingeschnitten ist, in die Aufnahme einschraubbar ist bzw. insbesondere kann die Verbindungseinrichtung wenigstens eine Klemmschraube aufweisen, die durch bzw. über wenigstens ein Teilgewinde, das an dieser Innenfläche vorgesehen ist bzw. in diese Innenfläche eingeschnitten ist, in die Aufnahme einschraubbar ist.

Die Aufnahme kann insbesondere in Form einer Vertiefung oder einer Öffnung oder einer Aussparung an der Verbindungseinrichtung ausgebildet sein bzw. die Aussparung kann insbesondere eine Vertiefung oder einer Öffnung oder einer Aussparung an der Verbindungseinrichtung sein.

Durch formschlüssiges und reibschlüssiges bzw. kraftschlüssiges Aufnehmen in der Aufnahme kann eine feste und lösbare Verbindung zwischen der Mutter bzw. der Außenfläche der Mutter und der jeweiligen Verbindungseinrichtung realisiert werden bzw. zwischen dem Schraubenkopf und der jeweiligen Verbindungseinrichtung realisiert werden. Durch Vorsehen einer derartigen Aufnahme kann durch einfach vornehmbares Aufnehmen bzw. Einbringen der Mutter bzw. des Schraubenkopfs in der Aufnahme nach Art eines Einsteckvorgangs bzw. Aufsteckvorgangs eine feste und lösbare Verbindung realisiert bzw. ermöglicht werden.

Sofern die Mutter bzw. der Schraubenkopf in der Aufnahme formschlüssig und reibschlüssig bzw. formschlüssig und kraftschlüssig aufnehmbar ist, kann ein feste und lösbare Verbindung bereits durch Einbringen der Mutter bzw. des Schraubenkopfs in die Aufnahme realisiert werden.

Bei einer praktischen Ausführungsform des Laserausrichtsystems weist die die erste Einrichtung eine Laserlicht-Erfassungseinrichtung auf und die zweite Einrichtung weist eine Laserlichtquelle auf (oder umgekehrt) oder die erste Einrichtung weist eine Laserlicht-Erfassungseinrichtung und eine Laserlichtquelle auf und die zweite Einrichtung weist eine Reflektoreinrichtung auf (oder umgekehrt). Vgl. in Bezug auf diese praktische Ausführungsform des Laserausrichtsystems auch entsprechende obige Ausführungen im Zusammenhang mit dem erfindungsgemäßen Verfahren.

Sofern die erste oder die zweite Einrichtung eine Laserlichtquelle aufweist bzw. in Form einer Laserlichtquelle ausgebildet ist, kann es sich bei der Laserlichtquelle um eine dem Fachmann bekannte Laserlichtquelle handeln, die dazu eingerichtet ist, einen Laserlichtstahl zu erzeugen, der für die Ermittlung bzw. Bestimmung der Fehlausrichtung unter Verwendung einer Laserlicht-Erfassungseinrichtung geeignet ist.

Sofern die erste Einrichtung eine Laserlicht-Erfassungseinrichtung aufweist und die zweite Einrichtung eine Laserlichtquelle aufweist (oder umgekehrt), kann es sich bei der Laserlicht-Erfassungseinrichtung um eine dem Fachmann bekannte Laserlicht-Erfassungseinrichtung handeln, die dazu eingerichtet ist, die Fehlausrichtung der Wellen bzw. der Wellen zueinander auf der Grundlage von Koordinaten der Laserlichtflecken des Laserlichtstrahls auf wenigstens zwei ebenen Messfeldern wenigstens zweier Laserlichtsensoren der Laserlicht-Erfassungseinrichtung zu erfassen.

Sofern die erste Einrichtung eine Laserlicht-Erfassungseinrichtung und eine Laserlichtquelle aufweist und die zweite Einrichtung eine Reflektoreinrichtung, die z.B. ein Umlenkprisma hat, aufweist (oder umgekehrt), kann es sich bei der Laserlicht-Erfassungseinrichtung um eine dem Fachmann bekannte Laserlicht-Erfassungseinrichtung handeln, die dazu eingerichtet ist, die Fehlausrichtung der Wellen bzw. der Wellen zueinander auf der Grundlage von Koordinaten der Laserlichtflecken des Laserlichtstrahls auf wenigstens einem ebenen Messfeld wenigstens eines Laserlichtsensors der Laserlicht-Erfassungseinrichtung zu erfassen.

Sofern die erste oder die zweite Einrichtung eine Laserlicht-Erfassungseinrichtung aufweist, kann diese Laserlicht Erfassungseinrichtung bei einer praktischen Ausführungsform einen ersten Laserlicht-Sensor mit einem ersten ebenen Messfeld, einen zweiten Laserlicht-Sensor mit einem zweiten ebenen Messfeld und einen Strahlungsteiler umfassen.

Bei dieser praktischen Ausführungsform der Laserlicht-Erfassungseinrichtung weist das erste Messfeld ein Koordinatensystem mit einer X1-Koordinatenachse und einer zu der X1-Koordinatenachse rechtwinkeligen Y1-Koordinatenachse aufweist, wobei der erste Laserlicht-Sensor dazu eingerichtet ist, die X1-Koordinate und Y1-Koordinate eines Laserlicht-Flecks eines auf das erste Messfeld auftreffenden Laserlichtstrahls auf dem ersten Messfeld zu erfassen. Das zweite Messfeld weist ein Koordinatensystem mit einer X2-Koordinatenachse und einer zu der X2-Koordinatenachse rechtwinkeligen Y2-Koordinatenachse auf, wobei der zweite Laserlicht-Sensor dazu eingerichtet ist, die X2-Koordinate und Y2-Koordinate eines Laserlicht-Flecks eines auf das zweite Messfeld auftreffenden Laserlichtstrahls auf dem zweiten Messfeld zu erfassen, wobei die Y2-Koordinatenachse des zweiten Messfelds parallel zur Y1-Koordinatenachse des ersten Messfelds orientiert ist und/oder wobei die X2-Koordinatenachse des zweiten Messfelds parallel zur X1-Koordinatenachse des ersten Messfelds orientiert ist.

Der Strahlungsteiler weist bei dieser praktischen Ausführungsform eine ebene Eintrittsfläche und eine zu dieser parallele Austrittsfläche auf, wobei die Eintrittsfläche parallel zur Y1-Koordinatenachse oder X1-Koordinatenachse ausgerichtet ist, wobei der Strahlungsteiler einen auf die ebene Eintrittsfläche auftreffenden Laserlichtstrahl der Laserlichtquelle in einen ersten Teilstrahl, der den Strahlungsteiler durchsetzt, und einen durch Reflexion eines Teils des Laserlichtstrahls an der Eintrittsfläche erzeugten zweiten Teilstrahl aufteilt, wobei der sich von dem Strahlungsteiler erstreckende optische Weg des ersten Teilstrahls und des zweiten Teilstrahls derart ausgebildet sind, dass der erste Teilstrahl auf das erste Messfeld und der zweite Teilstrahl auf das zweite Messfeld auftrifft und dass der optische Weg des ersten Teilstrahls bis zu dem ersten Messfeld kleiner ist als der optische Weg des zweiten Teilstrahls bis zu dem zweiten Messfeld.

Die Laserlicht-Erfassungseinrichtung gemäß der obigen praktischen Ausführungsform weist ferner eine Auswerteeinheit und eine Messeinrichtung zum Messen eines Drehwinkels auf. Die Messeinrichtung zum Messen eines Drehwinkels bzw. zum Messen eines Drehwinkels der ersten Welle oder der zweiten Wellen kann insbesondere ein Inklinometer umfassen.

Die Auswerteeinheit der Laserlicht-Erfassungseinrichtung gemäß der obigen praktischen Ausführungsform ist dazu eingerichtet, die Fehlausrichtung der beiden Wellen auf der Grundlage von Y1-Koordinaten und Y2-Koordinaten oder X1-Koordinaten und X2-Koordinaten des Laserlicht-Flecks des ersten und zweiten Teilstrahls, die durch den ersten Laserlicht-Sensor und den zweiten Laserlicht-Sensor beim Drehen der ersten oder der zweiten Welle in einem vorgegebenen Drehsinn um ein vorgegebenes Winkelmaß (vorzugsweise 360 Grad) in wenigstens fünf verschiedenen Drehstellungen (vorzugsweise in wesentlich mehr Drehstellungen) der ersten oder der zweiten Welle erfasst werden, und auf der Grundlage der durch die Messeinrichtung messbaren Drehwinkel, um welchen die erste oder zweite Welle in jeder der verschiedenen Drehstellungen gegenüber einer Anfangs-Drehstellung verdreht ist, zu ermitteln.

Die Ausbildung der optischen Wege der Teilstrahlen kann in bekannter Weise durch geeignete Wahl der Lagen des ersten und zweiten Messfelds relativ zu dem Strahlungsteiler und ggf. durch geeignete Wahl der Lage und Ausbildung wenigstens eines ggf. eingesetzten Umlenkmittels, wie z.B. eines Spiegels, relativ zu dem Strahlungsteiler realisiert werden.

Besonders bevorzugt sind/ist das erste und zweite Messfeld bzw. das Koordinatensystem des ersten Messfelds und des zweiten Messfelds der Laserlicht-Erfassungseinrichtung gemäß der obigen praktischen Ausführungsform derart in Bezug auf den Strahlungsteiler angeordnet, dass, wenn ein parallel zu einer Normalen auf dem ersten Messfeld ausgerichteter Laserlichtstrahl bzw. wenn ein mit dieser Normalen (also ein Vektor bzw. eine Gerade, die normal bzw. rechtwinkelig zu dem ersten Messfeld ausgerichtet ist) fluchtender Laserlichtstrahl auf die Eintrittsfläche des Strahlungsteilers auftrifft, der erste Teilstrahl auf dem ersten Messfeld einen Laserlicht-Fleck ausbildet dessen X1-Koordinate der X2-Koordinate des Laserlicht-Flecks des zweiten Teilstrahls auf dem zweiten Messfeld entspricht und dessen Y1-Koordinate der Y2-Koordinate des Laserlicht-Flecks des zweiten Teilstrahls auf dem zweiten Messfeld entspricht bzw. der Y2- Koordinate des Laserlicht-Flecks des zweiten Teilstrahls entspricht, der sich auf dem zweiten Messfeld bei Bestrahlung mit dem zweiten Teilstrahl ausbildet. Um dies zu realisieren, kann - zusätzlich zu einer ggf. erforderlichen entsprechenden Anpassung der Lage der Koordinatenachsen der Koordinatensysteme der beiden Messfelder zueinander - z.B. ein als Ausrichtlaserstrahl dienender Laserlichtstrahl, der parallel zu der Normalen bzw. fluchtend mit dieser ausgerichtet ist, auf die Eintrittsfläche des Strahlungsteilers auftreffen bzw. gestrahlt werden und die Position bzw. Lage des sich auf dem ersten Messfeld ausbildenden Laserlicht-Flecks des ersten Teilstrahls und die Position bzw. Lage des sich auf dem zweiten Messfeld ausbildenden Laserlicht-Flecks des zweiten Teilstrahls jeweils als Zentrum des Koordinatensystems definiert werden bzw. dem Zentrum zugordnet werden bzw. die Lagen des Koordinatensystems des ersten Messfelds und des zweiten Messfelds können auf dem ersten Messfeld und zweiten Messfeld hierfür derart gewählt bzw. versetzt werden, dass sich der Laserlicht-Fleck des ersten Teilstrahls im Zentrum des Koordinatensystems des ersten Messfelds und der Laserlicht-Fleck des zweiten Teilstrahls im Zentrum des Koordinatensystems des zweiten Messfelds befindet.

Durch diese obige Anordnung des ersten und zweiten Messfeld bzw. des Koordinatensystems des ersten Messfelds und des zweiten Messfelds in Bezug auf den Strahlungsteiler kann der Aufwand zum Ermitteln der Fehlausrichtung der Wellen auf der Grundlage der erfassten Koordinaten und Drehwinkel wirksam reduziert werden, da ein Versatz der Zentren nicht als Korrekturwert in die Ermittlung einbezogen werden muss.

Bei den Laserlicht-Sensoren kann es sich jeweils um einen beliebigen mit einem ebenen Messfeld versehenen Laserlicht-Sensor handeln. Besonders bevorzugt handelt es sich jeweils um einen Laserlicht-Sensor, der eine Mehrzahl von Zeilensensoren zur Ausbildung des Messfelds aufweist. Die von dem Laserlicht-Sensor erfassten X1 -Koordinaten und Y1-Koordinaten und X2-Koordinaten und Y2-Koordinaten können in Form analoger oder digitaler Signale über einen Signalübertragungsweg - auch kabellos- z.B. einer Auswerteeinrichtung, wie z.B. einem Computer z.B. in Form eines Laptops oder eines Tablets zur weiteren Auswertung zugeführt werden. Insbesondere kann es sich bei dem Laserlicht-Sensor um einen PSD-Sensor (PSD ist eine Abkürzung für "Position Sensitive Device") handeln.
Bei der vorstehend und nachstehend erwähnten X1-Koordinate und Y1-Koordinate bzw. X2-Koordinate und Y2-Koordinate des Laserlicht-Flecks handelt es sich selbstverständlich jeweils um die Koordinaten eines Punktes, obwohl der Laserlicht-Fleck immer eine flächige Ausdehnung auf dem jeweiligen Messfeld hat. Unter den X1-Koordinaten und Y1-Koordinaten bzw. X2-Koordinaten und Y2-Koordinaten des Laserlicht-Flecks sind vorstehend und nachstehend also immer die Koordinaten eines Punktes zu verstehen, der aus Ausbildung der Fläche und/oder Helligkeitsverteilung des Laserlicht-Flecks auf der Fläche bzw. dem Messfeld ermittelt werden kann. Insbesondere kann es sich bei dem Punkt z.B. um den Flächenschwerpunkt des Laserlicht-Flecks handeln. Die Ermittlung bzw. Berechnung des Punktes wird vorzugsweise mittels einer Berechnungsvorrichtung der Laserlicht-Erfassungseinrichtung, wie z.B. einem Computer, auf der Grundlage von dem jeweiligen Laserlicht-Fleck zugeordneten bzw. von diesem erzeugten oder bewirkten digitalen und/oder analogen Signalen vorgenommen, die von dem Laserlicht-Sensor ausgegeben werden. Sofern es sich beim Laserlicht-Sensor um einen PSD-Sensor handelt, kann die Berechnung des Flächenschwerpunkts z.B. in bekannter Weise auf der Grundlage geeigneter Widerstandsmessungen an den Sensorecken bzw. Felderecken erfolgen. Bei der Schwerpunktberechnung wird dann eine Fläche auf dem jeweiligen Messfeld ausgewertet. Diese Berechnung an einem PSD-Sensor kann es ermöglichen, Bewegungen eines Laserlicht-Flecks auf dem Messfeld im µm-Bereich zu ermitteln, so dass die Größe des Laserlicht-Flecks bei einem PSD-Sensor eine untergeordnete Rolle spielt.

### Kurzbeschreibung der Zeichnung

Nachfolgend werden Ausführungsbeispiele der Erfindung anhand der beigefügten Zeichnung näher erläutert. In der Zeichnung zeigen:
- Fig. 1: eine schematische Seitenansicht eines Teils einer Vorrichtung mit zwei Wellen, die durch eine Kupplung miteinander verbunden sind, zusammen mit einer Laserlichtquelle und einer Laserlicht-Erfassungseinrichtung, die an der Vorrichtung angeordnet sind,
- Fig. 2: eine schematische dreidimensionale Darstellung eines Teils einer weiteren Vorrichtung mit zwei Wellen, die durch eine Kupplung miteinander verbunden sind,
- Fig. 3A-3E: eine Draufsicht, zwei Schnittansichten und zwei dreidimensionale Darstellungen einer Verbindungseinrichtung,
- Fig. 4A-4C: eine schematische dreidimensionale Darstellung, eine schematische Seitenansicht und eine schematische Detailansicht einer dritten Vorrichtung mit zwei Wellen, die durch eine Kupplung miteinander verbunden sind, zusammen mit einer Laserlichtquelle und einer Laserlicht-Erfassungseinrichtung, die an der Vorrichtung angeordnet sind,
- Fig. 5A: eine schematische Darstellung eines Ausführungsbeispiels einer Laserlicht-Erfassungseinrichtung,
- Fig. 5B: eine schematische vergrößerte Darstellung der Messfelder der Einrichtung nach Fig. 5A,
- Fig. 5C: eine schematische Darstellung einer Stirnseite einer Welle,
- Fig. 6: die Laserlicht-Erfassungseinrichtung nach Fig. 5A, ergänzt um eine schematische Skizze zur Veranschaulichung der Arbeitsweise der Laserlicht-Erfassungseinrichtung,
- Fig. 7: eine Darstellung eines ersten und zweiten Messfelds, und
- Fig.8: eine Darstellung einer geschlossenen Bahnkurve in Form einer Ellipse innerhalb eines Koordinatensystems.

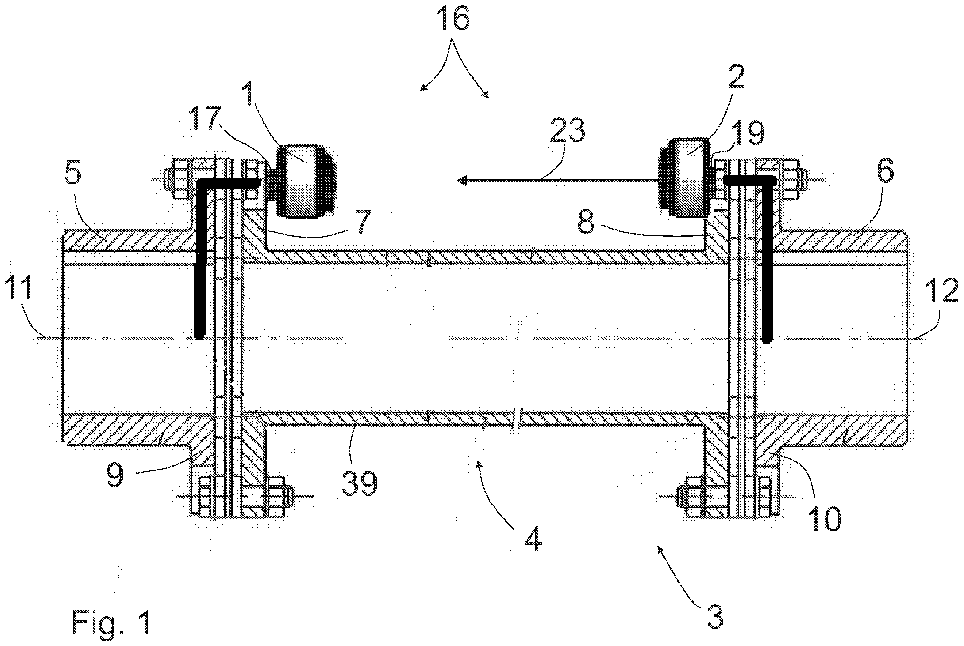

Die Fig1. zeigt ein Ausführungsbeispiel eines Laserausrichtsystems 16 in einem Zustand, in welchem das Laserausrichtsystem 16 mit einer Vorrichtung 3 verbunden ist. Die Fig. 1 zeigt nur einen Teil bzw. nur einen Bereich der Vorrichtung 3.

Die Vorrichtung 3 umfasst eine erste und zweite Welle 5, 6, die durch eine Kupplung 4 miteinander verbunden sind. Die Kupplung 4 weist einen ersten und einen zweiten Verbindungsflansch 7, 8 auf. An der ersten Welle 5 ist ein erstes Verbindungselement 9 in Form eines Wellenflansches 9 vorgesehen und an der zweiten Welle 6 ist ein zweites Verbindungselement 10 in Form eines Wellenflansches 10 vorgesehen. Das erste Verbindungselement 9 ist mit dem ersten Verbindungsflansch 7 verbunden und das zweite Verbindungselement 10 ist mit dem zweiten Verbindungsflansch 8 verbunden.

Die beiden Verbindungsflansche 7, 9 sind an einem Zwischenteil 39 der Kupplung 4 angeformt und dadurch mit diesem fest bzw. drehfest verbunden.

Das Laserausrichtsystem 16 umfasst eine erste Einrichtung 1 in Form einer Laserlicht-Erfassungseinrichtung 1 (bzw. umfasst eine erste Einrichtung 1, die eine Laserlicht-Erfassungseinrichtung 1 ist) und eine zweite Einrichtung 2 in Form einer Laserlichtquelle 2 (bzw. umfasst eine zweite Einrichtung 2, die eine Laserlichtquelle 2 ist).

Die Laserlicht-Erfassungseinrichtung 1 ist mit dem ersten Verbindungselement 9 in einer vorgegebenen Position zwischen den beiden Verbindungsflanschen 7,8 verbindbar ist, in welcher die Laserlicht-Erfassungseinrichtung 1 von der Kupplung 4 beabstandet ist. Die Laserlichtquelle 2 ist mit dem zweiten Verbindungselement 10 in einer vorgegebenen Position zwischen den beiden Verbindungsflanschen 7, 8 verbindbar ist, in welcher die Laserlichtquelle 2 von der Kupplung 4 beabstandet ist. Die Fig. 1 veranschaulicht hierbei schon den jeweiligen Verbindungszustand. Ferner ist die Verbindung zu den Verbindungsflanschen schematisch durch breite schwarze Linien veranschaulicht.

Zur Ermittlung einer eventuellen Fehlausrichtung der Wellen 5, 6 ist es nicht erforderlich, dass wenigstens ein ebenes Messfeld der Laserlicht-Sensoren der Laserlicht-Erfassungseinrichtung 1 rechtwinkelig zu der Drehachse 11 der ersten Welle ausgerichtet ist. Die Ausrichtung des Messfelds in Bezug auf die Drehachse 11 spielt keine Rolle, solange gewährleistet ist, dass der Laserstahl 23 der Laserlichtquelle 2 in jeder erwünschten Drehstellung der ersten bzw. zweiten Welle 5,6 auf das bzw. die Messfelder bzw. die Eintrittsfläche eines vorgesehenen Strahlungsteilers der Laserlicht-Erfassungseinrichtung 12 auftreffen kann.

Die vorgegebenen Positionen sind derart gewählt, dass ein von der Laserlichtquelle 2 erzeugter Laserlichtstrahl 23 in jeder Drehstellung bzw. in jeder vorgesehenen bzw. erwünschten Drehstellung der ersten und/oder zweiten Welle auf wenigstens ein ebenes Messfeld (in Fig. 1 nicht veranschaulicht) wenigstens eines Laserlichtsensors (in Fig. 1 nicht veranschaulicht) der Laserlicht-Erfassungseinrichtung 1 auftreffen kann.

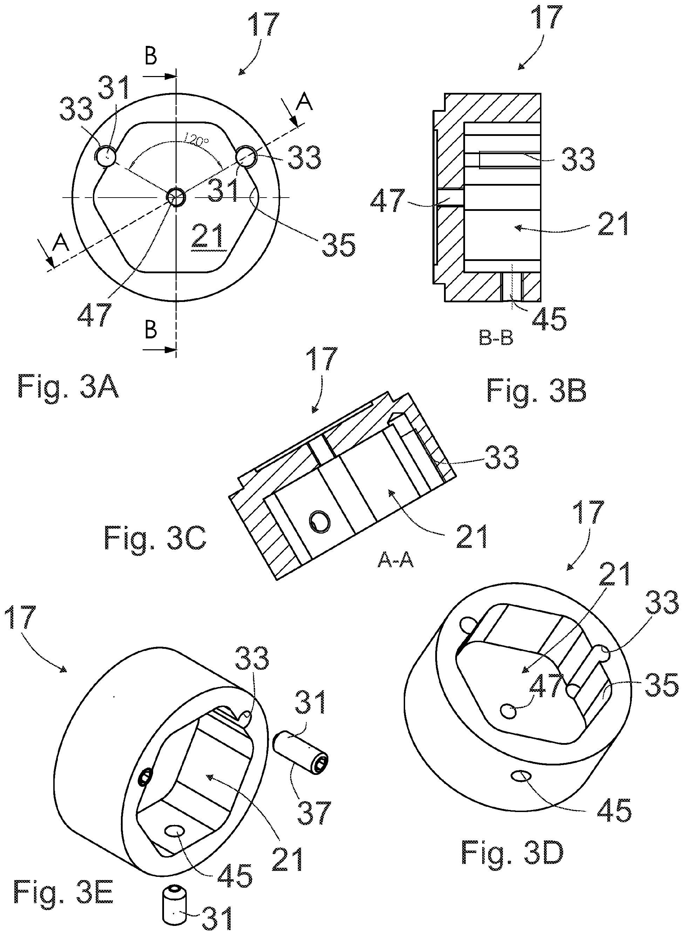

An der Laserlicht-Erfassungseinrichtung 1 ist eine Verbindungseinrichtung 17 (in Fig. 1 nur sehr schematisch dargestellt - vgl. auch Fig. 3A--3E) lösbar befestigt ist, mit welcher die Laserlicht-Erfassungseinrichtung 1 mit dem ersten Verbindungselement 9 in der vorgegebenen Position zwischen den beiden Verbindungsflanschen 7, 8 fest und lösbar verbindbar ist. Auch an der Laserlichtquelle 2 ist eine Verbindungseinrichtung 19 (in Fig. 1 nur sehr schematisch dargestellt - vgl. auch Fig. 3A--3E) lösbar befestigt ist, mit welcher die Laserlichtquelle 2 mit dem zweiten Verbindungselement 10 in der vorgegebenen Position zwischen den beiden Verbindungsflanschen 7, 8 fest und lösbar verbindbar ist.

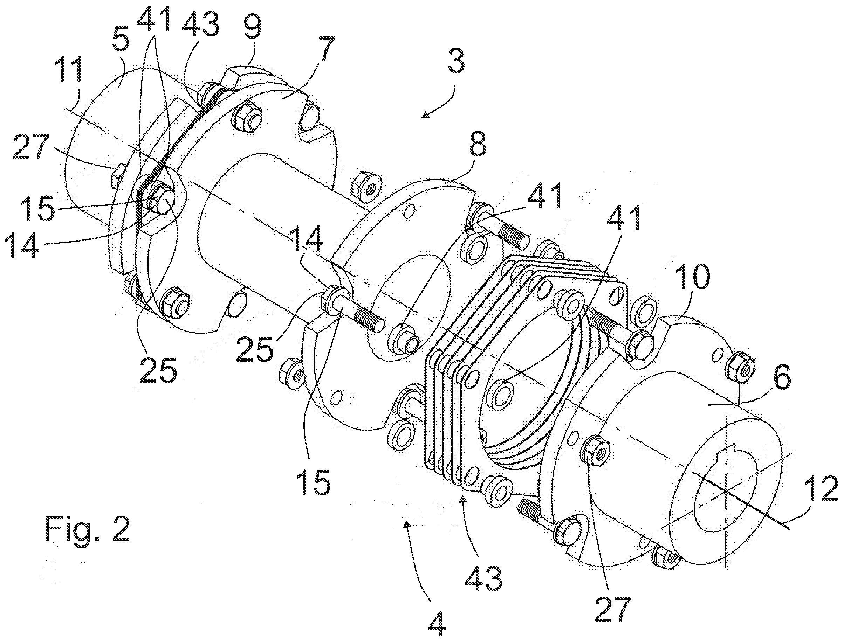

Die an der Laserlicht-Erfassungseinrichtung 1 lösbar befestigte Verbindungseinrichtung 17 ist mit einem Schraubenkopf 14 einer an dem ersten Verbindungselement 9 befestigten Schraube 15 fest und lösbar verbindbar. Zur Verdeutlichung dieser Verbindbarkeit wird auf die Fig. 2 verwiesen, die eine entsprechende Schraube 15 mit einem Schraubenkopf 14 an einer anderen Vorrichtung 3 - teilweise auch in Explosionsdarstellung - zeigt, wobei diese Vorrichtung 3 auch zwei Wellen 5, 6 aufweist, die durch eine Kupplung 4 miteinander verbunden sind. Der Schraubenkopf 14 weist eine dem zweiten Verbindungsflansch 8 zugewandte und rechtwinkelig zur Schraubenachse der Schraube 15 ausgerichtete Teilfläche 25 auf.

Auch die Laserlichtquelle 2 ist mit einem Schraubenkopf 14 einer an dem zweiten Verbindungselement 10 befestigten Schraube 15 fest und lösbar verbindbar - vgl. hier auch Fig. 2. Der Schraubenkopf 14 weist eine dem ersten Verbindungsflansch7 zugewandte und rechtwinkelig zur Schraubenachse der Schraube 15 ausgerichtete Teilfläche 25 auf.

Bei der an dem ersten bzw. zweiten Verbindungselement 9, 10 befestigten Schraube 15 (vgl. hierzu auch Fig. 2 zur Verdeutlichung) mit dem Schraubenkopf 14 handelt es sich jeweils um eine Schraube 15, welche das erste bzw. zweite Verbindungselement 9, 10 durchsetzt und deren Schraubenachse parallel zur Drehachse der ersten Welle bzw. zweiten Welle 5, 6 ausgerichtet ist. Die jeweilige Schraube 15 ist durch eine festgezogene Mutter 27 mit dem ersten bzw. zweiten Verbindungselement 9, 10 fest verbunden bzw. an diesem befestigt. Ferner handelt es sich bei den Schrauben 15 um Schrauben, durch welche die Kupplung 4 mit dem ersten bzw. zweiten Verbindungselement 9, 10 verbunden ist.

Die Kupplung 4 nach Fig. 2 weist zwei Lamellenpakete 43 auf, welche jeweils über zwei Hülsen 41 unter anderem an den Schrauben 15 aufgenommen sind.

Die an der Laserlicht-Erfassungseinrichtung 1 lösbar befestigte Verbindungseinrichtung 17 ist baugleich zu der an der Laserlichtquelle 2 lösbar befestigten Verbindungseinrichtung 19. An der Verbindungseinrichtung 17 (vgl. Fig. 3A -3E, entsprechendes trifft wegen der Baugleichheit auch für die Verbindungseinrichtung 19 zu) ist eine Aufnahme 21 vorgesehen bzw. die Verbindungseinrichtung 17 weist eine Aufnahme 21 in Form einer Vertiefung bzw. Aussparung auf, in welche der Schraubenkopf 14 der Schraube 15 zum festen und lösbaren Verbinden mit dem Schraubenkopf 14 formschlüssig aufnehmbar ist bzw. in welche der Schraubenkopf 14 der Schraube 15 zum festen und lösbaren Verbinden der Verbindungseinrichtung 17 mit dem Schraubenkopf 14 formschlüssig aufnehmbar ist. Zum Bereitstellen einer zusätzlichen reibschlüssigen Aufnahme bzw. Verbindung - wodurch in Verbindung mit der formschlüssigen Aufnahme die feste und lösbare Verbindung bewerkstelligt werden kann - weist die Verbindungseinrichtung 17 zwei jeweils über ein Gewinde 33 bzw. ein Teilgewinde 33, das an der die Aufnahme 21 begrenzenden Innenfläche 35 vorgesehen ist bzw. eingeschnitten ist, in die Aufnahme 21 einschraubbare Klemmschrauben 31 auf, deren Außengewinde 37 (vgl. Fig. 3E) einen Reibkontakt zu dem jeweils aufgenommen Schraubenkopf 14, der z.B. eine sechskantförmige Form aufweist, herstellen kann. Zur Realisierung einer hohen Verbindungswirkung weisen die Gewinde 33 ein Winkelabstand von 120 Grad auf (vgl. Fig. 3A). Eine weitere Klemmschraube 31 ist in eine sich von außerhalb der Verbindungseinrichtung 17 bis in die Aufnahme erstreckende Öffnung 45 mit einem Innengewinde einschraubbar. Eine weitere Öffnung 47 dient der Herstellung einer Schraubverbindung zum lösbaren Befestigen der Verbindungseinrichtung 17 mit der Laserlicht-Erfassungseinrichtung 1.

Ein Verfahren zum Anordnen des Laserausrichtsystems 16 umfassend die Laserlichtquelle 2 und die Laserlicht-Erfassungseinrichtung 1 an der Vorrichtung 3 (vgl. Fig. 1 bzw. Fig. 2) mit den beiden durch die Kupplung 4 miteinander verbundenen Wellen 6 weist die folgenden Schritte auf:
(A) Verbinden der Laserlicht-Erfassungseinrichtung 1 mit dem ersten Verbindungselement 9 zum Anordnen der Laserlicht-Erfassungseinrichtung 1 in einer/der vorgegebenen Position zwischen den beiden Verbindungsflanschen 7, 8, in welcher die Laserlicht-Erfassungseinrichtung 1 von der Kupplung 4 beabstandet ist, und
(B) Verbinden der Laserlichtquelle 2 mit dem zweiten Verbindungselement 10 zum Anordnen der Laserlichtquelle 2 in einer/der vorgegebenen Position zwischen den beiden Verbindungsflanschen 7,8, in welcher die Laserlichtquelle 2 von der Kupplung 4 beabstandet ist.

Bei dem Verfahren wird in Schritt A die Laserlicht-Erfassungseinrichtung 1 über bzw. durch die Verbindungseinrichtung 17 mit dem Schraubenkopf 14 der an dem ersten Verbindungselement 9 befestigten Schraube 15 verbunden.

Bei dem Verfahren wird in Schritt B die Laserlichtquelle 2 über bzw. durch die Verbindungseinrichtung 19 mit dem Schraubenkopf 14 der an dem zweiten Verbindungselement 10 befestigten Schraube 15 verbunden.

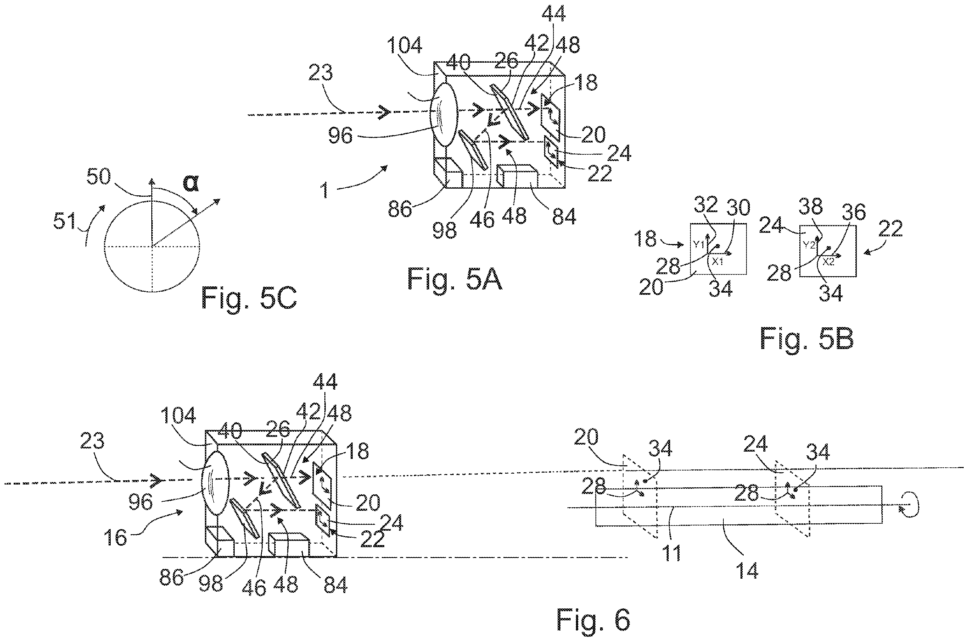

Der Aufbau der Laserlicht-Erfassungseinrichtung 1 nach Fig. 1A ist in Fig. 5A näher veranschaulicht.

Die Laserlicht-Erfassungseinrichtung 1 weist einen ersten Laserlicht-Sensor 18 mit einem ersten ebenen Messfeld 20, einen zweiten Laserlicht-Sensor 22 mit einem zweiten ebenen Messfeld 24 und einen Strahlungsteiler 26 auf, wobei die beiden Messfelder 20, 24 und der Strahlungsteiler 26 in einem Gehäuse 104 angeordnet sind.

Das erste Messfeld 20 (vgl. auch Fig. 5B) weist ein Koordinatensystem 28 mit einer X1-Koordinatenachse 30 und einer zu der X1-Koordinatenachse 30 rechtwinkeligen Y1-Koordinatenachse 32 auf und der erste Laserlicht-Sensor 18 ist dazu eingerichtet, die X1-Koordinate und Y1-Koordinate eines Laserlicht-Flecks 34 (vgl. auch Fig. 5B) eines auf das erste Messfeld 20 auftreffenden Laserlichtstrahls in Form eines ersten Teilstrahls 44 auf dem ersten Messfeld 20 zu erfassen,

Das zweite Messfeld 24 (vgl. auch Fig. 5B) weist ein Koordinatensystem 28 mit einer X2-Koordinatenachse 36 und einer zu der X2-Koordinatenachse 36 rechtwinkeligen Y2-Koordinatenachse 38 auf und der zweite Laserlicht-Sensor 22 ist dazu eingerichtet, die X2-Koordinate und Y2-Koordinate eines Laserlicht-Flecks 34 (vgl. auch Fig. 5B) eines auf das zweite Messfeld 24 auftreffenden Laserlichtstrahls in Form eines zweiten Teilstrahls 46 auf dem zweiten Messfeld 24 zu erfassen.

Die die Y2-Koordinatenachse 38 des zweiten Messfelds 24 ist parallel zur Y1-Koordinatenachse 32 des ersten Messfelds 20 orientiert und die X2-Koordinatenachse 36 des zweiten Messfelds 24 ist parallel zur X1-Koordinatenachse 30 des ersten Messfelds 20 orientiert, so dass die beiden Messfelder 20, 24 also insgesamt gesehen eine parallele Ausrichtung zueinander aufweisen.

Der Strahlungsteiler 26 weist eine ebene Eintrittsfläche 40 und eine zu dieser parallele Austrittsfläche 42 auf und die Eintrittsfläche 40 ist parallel zur X1-Koordinatenachse 30 ausgerichtet.

Der Strahlungsteiler 26 teilt einen durch eine Linse 96 auf die ebene Eintrittsfläche 40 auftreffenden Laserlichtstrahl 23 der Laserlichtquelle 2 in einen ersten Teilstrahl 44, der den Strahlungsteiler 26 durchsetzt, und einen durch Reflexion eines Teils des Laserlichtstrahls 23 an der Eintrittsfläche 40 erzeugten zweiten Teilstrahl 46 auf.

Der sich von dem Strahlungsteiler 26 erstreckende vorgegebene optische Weg 48 des ersten Teilstrahls 44 und sich von dem Strahlungsteiler 26 erstreckende vorgegebene optische Weg 48 des zweiten Teilstrahls 46 sind derart ausgebildet bzw. sind derart, dass der erste Teilstrahl 44 auf das erste Messfeld 20 und der zweite Teilstrahl 46 auf das zweite Messfeld 24 auftrifft, wobei der optische Weg des zweiten Teilstrahls 46 mittels eines Umlenkmittels in Form eines Spiegels 98, der auch innerhalb des Gehäuses 104 angeordnet ist, wirksam verlängert wird, so dass der optische Weg 48 des ersten Teilstrahls 44 bis zu dem ersten Messfeld 20 kleiner bzw. kürzer ist als der optische Weg des zweiten Teilstrahls 46 bis zu dem zweiten Messfeld 24.

Ferner sind das erste und zweite Messfeld 20, 24 derart in Bezug auf den Strahlungsteiler 26 angeordnet, dass die Koordinaten eines Laserlicht-Flecks 34 eines parallel zu einer Normalen des ersten Messfelds 20 ausgerichteten ersten Teilstrahls 44 auf dem ersten Messfeld 20 den Koordinaten des Laserlicht-Flecks 34 des zweiten Teilstrahls 46 auf dem zweiten Messfeld 24 entsprechen. Auf diese Weise kann der Aufwand zum Ermitteln der Fehlausrichtung der Wellen 5, 6 auf der Grundlage der erfassten Koordinaten und der für jede Drehstellung erfassten Drehwinkel wirksam reduziert werden.

Die Laserlicht-Erfassungseinrichtung 1 weist ferner eine Auswerteeinheit 84 und eine Messeinrichtung 86 zum Messen eines Drehwinkels α (vgl. auch Fig. 5C) auf.

Die Auswerteeinheit 84 ist dazu eingerichtet, die Fehlausrichtung Wellen 5, 6 auf der Grundlage von Y1-Koordinaten und Y2-Koordinaten oder X1-Koordinaten und X2-Koordinaten des Laserlicht-Flecks 34 des ersten und zweiten Teilstrahls 44, 46, die durch den ersten Laserlicht-Sensor 18 und den zweiten Laserlicht-Sensor 22 beim Drehen wenigstens einer der Wellen 5, 6 in einem vorgegebenen Drehsinn 51 (vgl. Fig. 5C) um ein vorgegebenes Winkelmaß in wenigstens fünf verschiedenen Drehstellungen der Einrichtung 14 erfasst werden, und auf der Grundlage der durch die Messeinrichtung 86 messbaren Drehwinkel a, um welchen die Welle bzw. die Wellen 5, 6 in jeder der verschiedenen Drehstellungen gegenüber einer Anfangs-Drehstellung 50 verdreht ist/sind (vgl. auch Fig. 5C, dort ist die Anfangs-Drehstellung 50 durch einen Pfeil mit durchgezogener Linie symbolisiert), zu ermitteln. Zu Messen des Drehwinkels α weist die Messeinrichtung 86 ein nicht näher dargestelltes Inklinometer auf. Die Koordinaten werden zwecks Auswertung von dem ersten und zweiten Laserlicht-Sensor 18, 22 an die Auswerteinheit 84 in Form von digitalen und/oder analogen Signalen übermittelt. Ferner werden die Drehwinkel zwecks Auswertung von der Messeinrichtung 86 an die Auswerteinheit 84 in Form von digitalen und/oder analogen Signalen übermittelt.

Dass eine eventuelle Fehlausrichtung der Wellen 5, 6 mittels der Laserlicht-Erfassungseinrichtung 1 zuverlässig ermittelt werden kann, ist eine Folge, des Umstands, dass durch Vorsehen des Strahlungsteilers 26 und der mit diesem bereitgestellten ersten und zweiten Teilstrahl 44, 46 eine Laserlicht-Erfassungseinrichtung 1 bereitgestellt wird, die eine ähnliche Ausrichtungsermittlung ermöglicht wie bei einer z.B. aus der DE 39 11 307 A1 bekannten Anordnung, in welcher die beiden Messfelder20, 24 entlang einer zur Drehachse parallelen Geraden an der drehbaren Einrichtung aufeinanderfolgend angeordnet sind. Durch die Laserlicht-Erfassungseinrichtung 1 kann eine Mess-Anordnung (vgl. Fig. 6) realisiert werden, in welcher die beiden Messfelder 20, 24 entlang der Drehachse 11 (vgl. auch Fig. 1 bzw. Fig. 2) der ersten Welle 5 *virtuell* aufeinanderfolgend angeordnet sind.

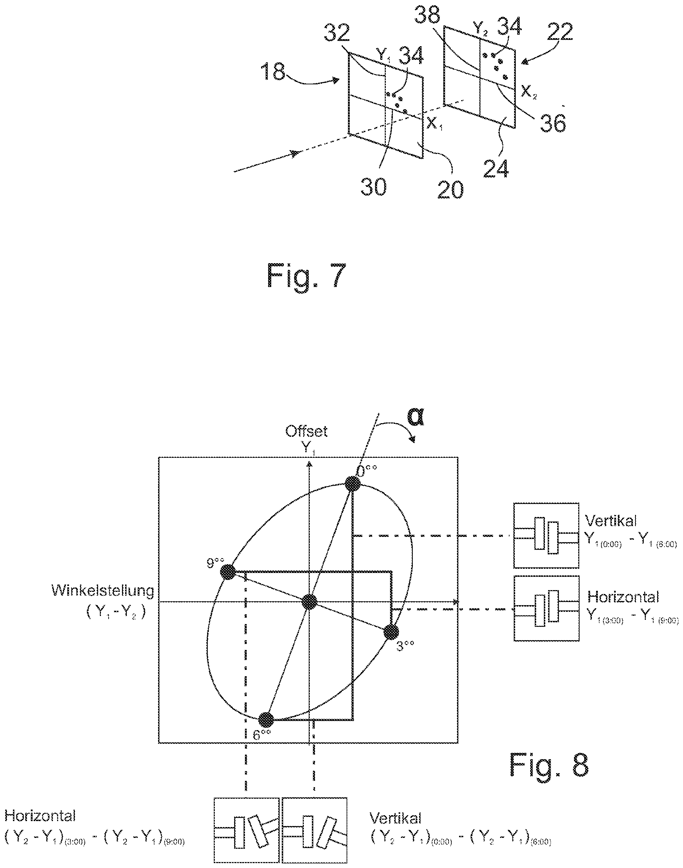

Ein Verfahren zum Ermitteln einer Fehlausrichtung der Wellen 5, 6 umfasst die folgenden Schritte:
(A1) Anordnen bzw. Verbinden der Laserlicht-Erfassungseinrichtung 1 und der Laserlichtquelle 2 an bzw. mit der Vorrichtung 3, wie oben dargelegt,
(B1) Bestrahlen der Eintrittsfläche 40 des Strahlungsteilers 26 mit dem Laserlichtstrahl 23 der Laserlichtquelle 2, wobei während des Bestrahlens der Eintrittsfläche 40 die erste Welle 5 oder die zweite Welle 6 ausgehend von der vorgegebenen Anfangs-Drehstellung 50 in einem vorgegebenen Drehsinn 51 (vgl. Fig. 5C) um 360 Grad um die Drehachse 11 der ersten Welle 5 oder um die Drehachse 12 der zweiten Welle 6(vgl. auch Fig. 1 oder Fig. 2) gedreht wird,
(C1) Erfassen der X1-Koordinaten und Y1-Koordinaten des Laserlicht-Flecks 34 des ersten Teilstrahls 44 auf dem ersten Messfeld 20 und der X2-Koordinaten und Y2-Koordinaten des Laserlicht-Flecks 34 des zweiten Teilstrahls 46 auf dem zweiten Messfeld 24 (vgl. auch Fig. 7) in wenigstens in fünf verschiedenen Drehstellungen der Welle 5 oder der Welle 6, die beim Drehen gemäß Schritt B eingenommen werden, und Erfassen des Drehwinkels a, um welchen die die Welle 5 oder 6 in jeder der verschiedenen Drehstellungen gegenüber der Anfangs-Drehstellung 50verdreht ist, und
(D1) Ermitteln der Fehlausrichtung der Wellen 5, 6 bzw. der Fehlausrichtung der Wellen 5, 6 zueinander auf der Grundlage der für jede Drehstellung erfassten Drehwinkel α und der erfassten Y1-Koordinaten und Y2-Koordinaten.

In Schritt D1 erfolgt das Ermitteln der Fehlausrichtung auf der Grundlage der für jede Drehstellung erfassten Drehwinkel α und der erfassten Y1-Koordinaten und Y2-Koordinaten, wobei hierfür die Y1 Koordinaten in Abhängigkeit von dem gemessenen Drehwinkel α über der aus den Y1-Koordinaten und Y2-Koordinaten gebildeten Differenz Y1-Y2 - die ebenfalls in Abhängigkeit vom dem gemessenen Drehwinkel α dargestellt wird - aufgetragen werden und eine geschlossenen Bahnkurve in Form einer Ellipse durch Kurvenanpassung an die aufgetragenen Koordinaten ermittelt wird (vgl. Fig. 8). Mittels dieser ermittelten Bahnkurve kann dann die Fehlausrichtung in Form eines ggf. vorhandenen horizontalen Winkelversatzes und/oder vertikalen Winkelversatzes und/oder horizontalen Parallelversatzes und/oder vertikalen Parallelversatzes in der in Fig. 8 veranschaulichten Weise einfach ermittelt bzw. abgelesen werden. Zugrunde gelegt werden hierbei die Differenzen Y2- Y1 und die Y1-Werte auf der Bahnkurve in der sogenannten 0-Uhr (0:00)-Position, der 3-Uhr (3:00)-Position, der 6-Uhr (6:00)-Position und der 9-Uhr (9:00)-Position, wobei es sich bei diesen Positionen letztlich um die von der Messeinrichtung 86 gemessenen Winkel α in Höhe von null Grad, 90 Grad, 180 Grad und 270 Grad relativ zur Schwerkraftrichtung handelt.

Gemäß Schritt C1 können vorteilhaft auch lediglich wenigstens fünf Drehstellungen ausreichen, da die beim Drehen der ersten oder zweiten Welle 5, 6 um 360 Grad von den Laserlichtflecken der beiden Teilstrahlen auf dem ersten und zweiten Messfeld beschreibbaren geschlossenen Bahnkurven je nach Einstrahlrichtung des Laserlichtstrahls auf die Eintrittsfläche des Strahlungsteilers in Form von Ellipsen oder Kreisen ausgebildet sind und eine Ellipse durch wenigstens fünf Punkte und ein Kreis durch wenigstens drei Punkte festgelegt ist, so dass man also mit wenigstens fünf Drehstellungen sicher liegt.

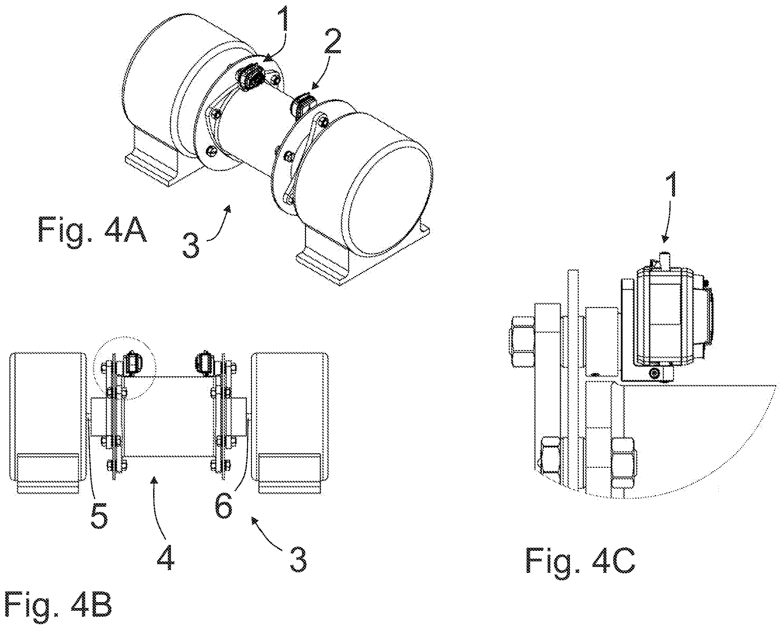

Die ebenfalls zwei durch eine Kupplung 4 miteinander verbundene Wellen 5, 6 aufweisende Vorrichtung 3 nach den Fig. 4A-4C unterscheidet sich von den obigen entsprechenden Vorrichtungen 3 vor allem durch eine unterschiedliche Ausbildung der Kupplung 4. Die an der Vorrichtung 3 angeordnete bzw. anzuordnende Laserlicht-Erfassungseinrichtung 1 und die an der Vorrichtung 3 angeordnete bzw. anzuordnende Laserlichtquelle 2 sind jedoch baugleich zu den entsprechenden oben beschriebenen Einrichtungen.

### Bezugszeichenliste

- 1: erste Einrichtung
- 2: zweite Einrichtung
- 3: Vorrichtung
- 4: Kupplung
- 5: erste Welle
- 6: zweite Welle
- 7: erster Verbindungsflansch
- 8: zweiter Verbindungsflansch
- 9: erstes Verbindungselement
- 10: zweites Verbindungselement
- 11: Drehachse
- 12: Drehachse
- 14: Schraubenkopf
- 15: Schraube
- 16: Laserausrichtsystem
- 17: Verbindungseinrichtung
- 18: erster Laserlicht-Sensor
- 19: Verbindungseinrichtung
- 20: erstes ebenes Messfeld
- 21: Aufnahme
- 22: zweiter Laserlicht-Sensor
- 23: Laserlichtstrahl
- 24: zweites ebenes Messfeld
- 25: Teilfläche
- 26: Strahlungsteiler
- 27: Mutter
- 28: Koordinatensystem
- 30: X1-Koordiantenachse
- 31: Klemmschraube
- 32: Y1-Koordinatenachse
- 33: Gewinde
- 34: Laserlicht-Fleck
- 35: Innenfläche
- 36: X2-Koordinatenachse
- 37: Außengewinde
- 38: Y2-Koordinatenachse
- 39: Zwischenteil
- 40: Eintrittsfläche
- 41: Hülse
- 42: Austrittsfläche
- 43: Lammellenpaket
- 44: erster Teilstrahl
- 45: Öffnung
- 46: zweier Teilstrahl
- 47: Öffnung
- 48: optischer Weg
- 50: Anfangs-Drehstellung
- 51: Drehsinn
- 84: Auswerteinheit
- 86: Messeinrichtung
- 96: Linse
- 98: Spiegel
- 104: Gehäuse

## Patentansprüche

1. Verfahren zum Anordnen eines Laserausrichtsystems (16) an einer Vorrichtung (3) mit zwei durch eine Kupplung (4) miteinander verbundenen Wellen (5, 6),
wobei das Laserausrichtsystem (16) wenigstens eine erste Einrichtung (1) und wenigstens eine zweite Einrichtung (2) aufweist,
wobei die Kupplung (4) einen ersten und einen zweiten Verbindungsflansch (7, 8) aufweist,
wobei an einer ersten der beiden Wellen (5,6) ein erstes Verbindungselement (9) vorhanden ist, wobei an der zweiten Welle (6) der beiden Wellen (5, 6) ein zweites Verbindungselement (10) vorhanden ist,
wobei das erste Verbindungselement (9) mit dem ersten Verbindungsflansch (7) verbunden ist,
wobei das zweite Verbindungselement (10) mit dem zweiten Verbindungsflansch (8) verbunden ist,
wobei das Verfahren die folgenden Schritte umfasst:
(A) Verbinden der ersten Einrichtung (1) mit dem ersten Verbindungselement (9) zum Anordnen der ersten Einrichtung (1) in einer vorgegebenen Position zwischen den beiden Verbindungsflanschen (7, 8), in welcher die erste Einrichtung (1) von der Kupplung (4) beabstandet ist, und
(B) Verbinden der zweiten Einrichtung (2) mit dem zweiten Verbindungselement (10) zum Anordnen der zweiten Einrichtung (2) in einer vorgegebenen Position zwischen den beiden Verbindungsflanschen (7,8), in welcher die zweite Einrichtung (2) von der Kupplung (4) beabstandet ist.

2. Verfahren nach Anspruch 1, **dadurch gekennzeichnet, dass** in Schritt A die erste Einrichtung (1) mit einer Außenfläche wenigstens einer Mutter verbunden wird, die auf wenigstens ein an dem ersten Verbindungselement (9) befestigten Verschraubungsmittel aufgeschraubt ist und/oder dass in Schritt A die erste Einrichtung (1) mit wenigstens einem Schraubenkopf (14) wenigstens einer an dem ersten Verbindungselement (9) befestigten Schraube (15) verbunden wird.

3. Verfahren nach Anspruch 1 oder 2, **dadurch gekennzeichnet, dass** in Schritt B die zweite Einrichtung (2) mit einer Außenfläche wenigstens einer Mutter verbunden wird, die auf wenigstens ein an dem zweiten Verbindungselement (10) befestigten Verschraubungsmittel aufgeschraubt ist, und/oder dass in Schritt B die zweite Einrichtung (2) mit wenigstens einem Schraubenkopf (14) wenigstens einer an dem zweiten Verbindungselement (10) befestigten Schraube (15) verbunden wird.

## Claims

1. Method for arranging a laser alignment system (16) on a device (3) having two shafts (5, 6) connected to each other by a coupling (4),
wherein the laser alignment system (16) has at least a first apparatus (1) and at least a second apparatus (2),
wherein the coupling (4) has a first and a second connecting flange (7, 8),
wherein there is a first connecting element (9) on a first of the two shafts (5, 6),
wherein there is a second connecting element (10) on the second shaft (6) of the two shafts (5, 6), wherein the first connecting element (9) is connected to the first connecting flange (7), wherein the second connecting element (10) is connected to the second connecting flange (8),
wherein the method comprises the following steps:
(A) connecting the first apparatus (1) to the first connecting element (9) to arrange the first apparatus (1) in a predefined position between the two connecting flanges (7, 8), in which the first apparatus (1) is spaced apart from the coupling (4), and
(B) connecting the second apparatus (2) to the second connecting element (10) to arrange the second apparatus (2) in a predefined position between the two connecting flanges (7, 8), in which the second apparatus (2) is spaced apart from the coupling (4).

2. Method according to Claim 1, **characterized in that** in step A the first apparatus (1) is connected to an outer surface of at least one nut, which is screwed onto at least one screwing means fixed to the first connecting element (9), and/or **in that** in step A the first apparatus (1) is connected to at least one screw head (14) of at least one screw (15) fixed to the first connecting element (9).

3. Method according to Claim 1 or 2, **characterized in that** in step B the second apparatus (2) is connected to an outer surface of at least one nut, which is screwed onto at least one screwing means fixed to the second connecting element (10), and/or **in that** in step B the second apparatus (2) is connected to at least one screw head (14) of at least one screw (15) fixed to the second connecting element (10).

## Revendications

1. Procédé servant à disposer un système d'alignement à laser (16) sur un dispositif (3) comportant deux arbres (5, 6) reliés l'un à l'autre par un couplage (4),
dans lequel le système d'alignement à laser (16) comporte au moins un premier équipement (1) et au moins un deuxième équipement (2),
dans lequel le couplage (4) comporte des première et deuxième brides de liaison (7, 8),
dans lequel un premier élément de liaison (9) est présent sur un premier des deux arbres (5, 6), dans lequel un deuxième élément de liaison (10) est présent sur le deuxième arbre (6) des deux arbres (5, 6),
dans lequel le premier élément de liaison (9) est relié à la première bride de liaison (7),
dans lequel le deuxième élément de liaison (10) est relié à la deuxième bride de liaison (8),
dans lequel le procédé comprend les étapes consistant à :
(A) relier le premier équipement (1) au premier élément de liaison (9) afin de disposer le premier équipement (1) dans une position prédéterminée entre les deux brides de liaison (7, 8), dans laquelle le premier équipement (1) est séparé du couplage (4), et
(B) relier le deuxième équipement (2) au deuxième élément de liaison (10) afin de disposer le deuxième équipement (2) dans une position prédéterminée entre les deux brides de liaison (7, 8), dans laquelle le deuxième équipement (2) est espacé du couplage (4).

2. Procédé selon la revendication 1, **caractérisé en ce que**, lors de l'étape A, le premier équipement (1) est relié à une surface extérieure d'au moins un écrou qui est vissé sur au moins un moyen de vissage fixé au premier élément de liaison (9),
et/ou **en ce que**, lors de l'étape A, le premier équipement (1) est relié à au moins une tête de vis (14) d'au moins une vis (15) fixée au premier élément de liaison (9).

3. Procédé selon la revendication 1 ou 2, **caractérisé en ce que**, lors de l'étape B, le deuxième équipement (2) est relié à une surface extérieure d'au moins un écrou qui est vissé sur au moins un moyen de vissage fixé au deuxième élément de liaison (10), et/ou **en ce que**, lors de l'étape B, le deuxième équipement (2) est relié à au moins une tête de vis (14) d'au moins une vis (15) fixée au deuxième élément de liaison (10).
